(19) Europäisches Patentamt
European Patent Office
Office européen des brevets

(11) **EP 4 273 758 A1**

(12) **EUROPEAN PATENT APPLICATION**
published in accordance with Art. 153(4) EPC

(43) Date of publication:
**08.11.2023 Bulletin 2023/45**

(21) Application number: **21914521.6**

(22) Date of filing: **29.12.2021**

(51) International Patent Classification (IPC):
**G06N 10/00** *(2022.01)*  **G06F 17/16** *(2006.01)*

(52) Cooperative Patent Classification (CPC):
**G06F 17/16; G06N 10/00**

(86) International application number:
**PCT/CN2021/142565**

(87) International publication number:
**WO 2022/143789 (07.07.2022 Gazette 2022/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.12.2020  CN 202011637102**
**31.12.2020  CN 202011633352**
**29.01.2021  CN 202110122930**

(71) Applicant: **Origin Quantum Computing Technology**
**(Hefei) Co., Ltd**
**Hefei, Anhui 230088 (CN)**

(72) Inventors:
• LI, Ye
  **Hefei, Anhui 230088 (CN)**
• AN, Ningbo
  **Hefei, Anhui 230088 (CN)**
• DOU, Menghan
  **Hefei, Anhui 230088 (CN)**

(74) Representative: **Rau, Schneck & Hübner**
**Patentanwälte Rechtsanwälte PartGmbB**
**Königstraße 2**
**90402 Nürnberg (DE)**

(54) **QUANTUM PREPROCESSING METHOD AND APPARATUS, STORAGE MEDIUM, AND ELECTRONIC APPARATUS**

(57)    Disclosed are a quantum preprocessing method, device, storage medium and electronic device. The quantum preprocessing method includes: acquiring element information of a first matrix A and a first vector b in a linear system $Ax = \vec{b}$; constructing a new matrix M for linear system preprocessing; computing a second matrix A' and a second vector *b'* for constructing a quantum circuit, according to the new matrix M; and constructing, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit. (Figure 2)

```
Acquiring element information of a first matrix          S21
and a first vector in a linear system

Constructing a new matrix for linear system             S22
preprocessing

Computing a second matrix and a second vector           S23
for constructing a quantum circuit, according to
the new matrix

Constructing, a first quantum circuit representing      S24
a quantum state evolution of a specific class of
element in the second matrix, and a second
quantum circuit representing a quantum state
evolution of a specific class of element in the
second vector, and executing a quantum state
evolution operation respectively on the first
quantum circuit and the second quantum circuit, to
obtain an evolved quantum state of the first
quantum circuit and an evolved quantum state of
the second quantum circuit
```

**FIG.2**

## Description

The disclosure relates to the technical field of quantum computing, specifically to a quantum preprocessing method, device, storage medium and electronic device for a linear system. The disclosure claims priority to: Chinese patent application No. 202011637102.6, entitled "QUANTUM PREPROCESSING METHOD AND DEVICE FOR LINEAR SYSTEMS", filed on December 31, 2020; Chinese patent application No. 202011633352.2, entitled "QUANTUM PREPROCESSING METHOD AND DEVICE BASED ON SPARSE LINEAR SYSTEM", filed on December 31, 2020; and Chinese patent application No. 202110122930.4, entitled "SPARSE APPROXIMATE INVERSE QUANTUM PREPROCESSING METHOD AND DEVICE FOR SPARSE LINEAR SYSTEMS", filed on January 29, 2021; all of which are hereby incorporated by reference in their entireties.

## TECHNICAL FIELD

The disclosure relates to the technical field of quantum computing, specifically to a quantum preprocessing method, device, storage medium and electronic device for a linear system.

## BACKGROUND

Solution of a large system of linear equations is an important issue in various scientific and engineering computations. With rapid development of recent computer technologies, large-scale scientific computing has entered the era of large-scale parallel computing, and it is particularly important to conduct researches on efficient parallel algorithms for large-scale linear systems based on parallel computing environments.

Quantum computing is a new type of computing, and the principle thereof is to construct a computing framework with the theory of quantum mechanics. When solving some problems, compared with the optimal classical algorithm, quantum computing has the effect of exponential acceleration. Linear system solving is a kind of problem that can be solved by quantum computing. Quantum computing uses quantum superposition, and has an exponential acceleration effect during solution of linear systems via quantum linear solvers. Therefore, quantum linear solvers are expected to accelerate the solution process of many practical problems in the field of science and engineering.

However, complexity of a quantum linear solver is related to the polynomial of the condition number $\kappa$ of the linear system. The complexity is expressed as

$$\mathcal{O}(\mathrm{poly}(\kappa)).$$

Accordingly, there arises a problem that acceleration performance of quantum computing is under negative influence due to a large condition number of the linear system, causing difficulty on solution of equations thereof. Quantum preprocessing technology is a technology developed to solve the problem. The existing quantum preprocessing technology is too scarce, and no effective universal quantum preprocessing technology has been proposed, and the existing quantum preprocessing technology cannot satisfy different linear systems.

Based on this, it is necessary to implement a quantum preprocessing technology that can satisfy different linear systems, which can be used for the simulation of quantum computing, lower the condition number, and fill in the gaps in related technologies.

## SUMMARY

. An object of the present disclosure is to provide a quantum preprocessing method and device for linear systems to address the deficiencies in the prior art. It can realize a quantum preprocessing technology that can satisfy different linear systems, and is used for simulation of quantum computing, lower the condition number, and fill the technical gap in the field of quantum computing.

According to one aspect of the present disclosure, there is provided a quantum preprocessing method for a linear system, including: acquiring element information of a first matrix A and a first vector b in a linear system Ax = b; constructing a new matrix M for linear system preprocessing; computing a second matrix A' and a second vector $b'$ for constructing a quantum circuit, according to the new matrix M; and constructing, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit.

According to another aspect of the present disclosure, there is provided a quantum preprocessing device for a linear system, including modules for performing each processing in the quantum preprocessing method disclosed herein.

According to another aspect of the present disclosure, there is provided a storage medium having a computer program stored therein, the computer program being configured to perform during execution thereof the method described in any one embodiment of the above.

According to another aspect of the present disclosure, there is provided an electronic device, including a memory having a computer program stored therein, and a processor, configured to execute the computer program to perform the method described in any one embodiment of the above.

Compared with the prior art, the disclosure provides a quantum preprocessing method for a linear system. First, element information of a first matrix A and a first vector b in a linear system $Ax = b$ is acquired. Then, a new matrix M for linear system preprocessing is constructed. Next, a second matrix A' and a second vector $b'$ for constructing a quantum circuit are computed, according to the new matrix M. Next, a first quantum circuit representing a quantum state evolution of a specific class of element in the second matrix A', and a second quantum circuit representing a quantum state evolution of a specific class of element in the second vector b' are constructed. Finally, a quantum state evolution operation is executed respectively for the first quantum circuit and the second quantum circuit, to obtain an evolved quantum state of the first quantum circuit and an evolved quantum state of the second quantum circuit. It can be seen that by using the superposition characteristics of quantum, by encoding relevant information of the linear system onto quantum states, a classical data structure is linked with qubit states in the quantum field (that is, the quantum state), a quantum preprocessing technology that can satisfy different linear systems can be realized, which can be used in the simulation of quantum computing, lowers the condition number of linear systems, and fills in the technical gaps in the field of quantum computing.

## BRIEF DESCRIPTION OF THE DRAWINGS

FIG. 1 is a block diagram of a hardware structure of a computer terminal for a quantum preprocessing method for a linear system according to an embodiment of the present disclosure;

FIG. 2 is a schematic flow diagram of a quantum preprocessing method for a linear system according to an embodiment;

FIG. 3 is a schematic flow chart of a quantum preprocessing method for a linear system according to another embodiment;

FIG. 4 is a schematic flow diagram of a quantum preprocessing method based on a sparse linear system according to another embodiment;

FIG. 5 is a schematic flow diagram of a sparse approximate inverse quantum preprocessing method for a sparse linear system according to another embodiment;

FIG. 6 is a schematic diagram of a quantum circuit relating to T according to another embodiment;

FIG. 7 is a schematic diagram of a quantum circuit relating to a walk operator W according to another embodiment;

FIG. 8 is a schematic diagram of a quantum circuit implementing the third Oracle function according to another embodiment;

FIG. 9 is a schematic structural illustration of a quantum preprocessing device for linear systems according to another embodiment.

## DETAILED DESCRIPTION

Embodiments below described with reference to the accompanying drawings are exemplary and for explaining the present invention only, and shall not be construed as limiting the present invention.

Embodiments of the present disclosure firstly provide a quantum preprocessing method for a linear system, which can apply to electronic devices, such as computer terminals, specifically, general computers, quantum computers, and the like.

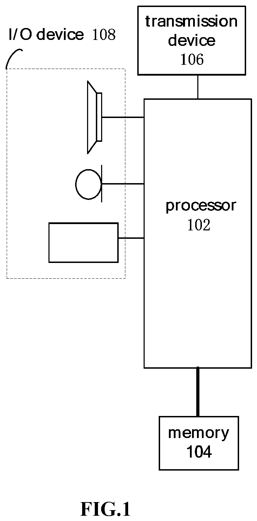

The embodiments will be described below in detail, taking operation thereof on a computer terminal as an example. FIG. 1 is a hardware structural block diagram of a computer terminal for a quantum preprocessing method for a linear system provided by an embodiment of the present disclosure. As shown in Figure 1, a computer terminal may include one or more (only one is shown in Figure 1) processors 102 (processors 102 may include but not limited to processing devices such as microprocessors MCUs or programmable logic devices FPGAs) and a memory 104 for storing data. Optionally, the above-mentioned computer terminal may further include a transmission device 106 and an I/O (input/output) device 108 for communication functions. Those skilled in the art can understand that the structure shown in FIG. 1 is only for illustration, and constitutes no limitation to the structure of the above computer terminal. For example, the computer terminal may also include more or fewer components than shown in FIG. 1, or have a configuration different from that shown in FIG. 1.

The memory 104 may be configured to store software programs and modules of applications, such as the program instructions/modules corresponding to the implementation of a quantum preprocessing method for a linear system in the embodiment of the present application. The processor 102 runs software programs and modules stored in the memory 104, so as to execute various functional applications and data processing, that is, to realize the above-mentioned methods. The memory 104 may include a high-speed random-access memory, and may also include a non-volatile memory, such as one or more of magnetic storage devices, flash memory, or other non-volatile solid-state memory. In some examples, the memory 104 may further include a memory that is remotely located relative to the processor 102, and these remote memories may be connected to a computer terminal through a network. Examples of the aforementioned networks include, but are not limited to, the Internet, intranets, local area networks, mobile communication networks, and combinations thereof.

The transmission device 106 is configured to receive or transmit data via a network. The specific example of the above-mentioned network may include a wireless network provided by the communication provider of the computer terminal. In one example, the transmission device 106 includes a network adapter (Network Interface Controller, NIC), which can be connected to other network devices through a base station so as to communicate with the Internet. In one example, the transmission device 106 may be a radio frequency (Radio Frequency, RF) module, which is configured to communicate with the Internet in a wireless manner.

It should be noted that a real quantum computer is of a hybrid structure, which consists of two parts: one is a classical computer, which functions to execute classical computing and control; the other is a quantum device, which functions to run quantum programs and implements quantum computing. The quantum program is a series of instruction sequences written in a quantum language such as QRunes that can be run on a quantum computer, which supports quantum logic gate operations and finally realizes quantum computing. Specifically, a quantum program is a series of instruction sequences that operate quantum logic gates in a certain sequence.

In practical applications, due to the limitation of the development of quantum device hardware, quantum computing simulations are usually required to verify quantum algorithms, quantum applications, etc. Quantum computing simulation is the process of simulating the operation of quantum programs corresponding to specific problems using a virtual architecture built with the resources of general computers (that is, quantum virtual machines). Typically, quantum programs corresponding to specific problems need to be constructed. The quantum program referred to in the embodiments of the present disclosure is a program written in a classical language that characterizes qubits and their evolution, in which qubits, quantum logic gates, etc. related to quantum computing all have expressions with corresponding classical codes.

As an embodiment of quantum programs, quantum circuits, also known as quantum logic circuits, are the most commonly used general-purpose quantum computing models, which means circuits that operate on qubits under abstract concepts: components thereof include qubits, circuits (timelines), and various quantum logic gates; and results thereof usually need to be read out through quantum measurement operations.

Unlike traditional circuits, which are connected by metal wires to transmit voltage signals or current signals, in quantum circuits, the circuits can be regarded as connected by time, that is, the state of qubits evolves naturally with time. In this process, it follows the instruction of the Hamiltonian operator, and is operated upon its encounter with a logic gate.

A quantum program as a whole corresponds to a total quantum circuit, and the quantum program in the present disclosure refers to the total quantum circuit, wherein the total number of qubits in the total quantum circuit is the same as the total number of qubits in the quantum program. It can be understood that: a quantum program can be consisted of quantum circuits, measurement operations for qubits in quantum circuits, registers for storing measurement results, and control flow nodes (jump instructions). A quantum circuit can contain tens, hundreds or even tens of thousands of quantum logic gate operations. An execution process of a quantum program is the process of executing all quantum logic gates according to a certain time sequence. It is to be noted that "timing" refers to a time sequence in which a single quantum logic gate is executed.

It should be noted that in classical computing, the most basic unit is a bit, and the most basic control mode is a logic gate. The purpose of controlling a circuit can be achieved through the combination of logic gates. Similarly, the way to handle qubits is quantum logic gates. The use of quantum logic gates can make the quantum state evolve. Quantum logic gates are the basis of quantum circuits. Quantum logic gates include single-bit quantum logic gates, such as Hadamard gates (H gates, Hadamard gates), Pauli-X gates (X gate), Pauli-Y gate (Y gate), Pauli-Z gate (Z gate), RX gate, RY gate, RZ gate, etc.; multi-bit quantum logic gates, such as CNOT gate, CR gate, iSWAP Doors, Toffoli doors and more. Quantum logic gates are generally represented by unitary matrices, and unitary matrices are not only in the form of matrices, but also a kind of operation and transformation. Generally, the action of a quantum logic gate on a quantum state is computed by multiplying the left side of the unitary matrix by the matrix corresponding to the right vector of the quantum state.

Those skilled in the art can understand that in a classical computer, the basic unit of information is a bit, a bit having two states of 0 and 1, and the most common physical implementation method is to represent these two states through electric level. In quantum computing, the basic unit of information is the qubit. A qubit also has two states, 0 and 1, recorded as 10) and 11), nevertheless, it can be in a superposition state of the two states of 0 and 1, which can be expressed as $|\varphi\rangle = a|0\rangle + b|1\rangle$, where "a" and "b" are complex numbers representing amplitudes of the 10) state and the 11) state (probability amplitude), which is not available in classical bits. After measurement, the qubit state will collapse to a definite state (eigenstate, here the 10) state and the $|1\rangle$ state ), where the probability of collapsing to 10) is $|a|^2$, and the probability of collapsing to $|1\rangle$ is $|b|^2$, wherein $|a|^2 + |b|^2 = 1$, and "|)" is the Dirac symbol.

The "quantum state" refers to the qubit state, and its eigenstate is expressed in binary in the quantum algorithm (or quantum program). For example, a group of qubits including q0, q1, and q2 represents the 0th, 1st, and 2nd qubits, arranging from high to low as q2qlq0, the quantum states of this group of qubits being a superposition state of 23 eigenstates. The 8 eigenstates (definite states) are $|000\rangle$, $|001\rangle$, $|010\rangle$, $|011\rangle$, $|100\rangle$, $|101\rangle$, $|110\rangle$, $|111\rangle$, each eigenstate consistently corresponds to a qubit: taking $|000\rangle$ as an example, where 000 corresponds to q2qlq0 from high to low. In short, a quantum state is a superposition state composed of eigenstates, and it is in one of the definite eigenstates when probability amplitudes of other states are all 0.

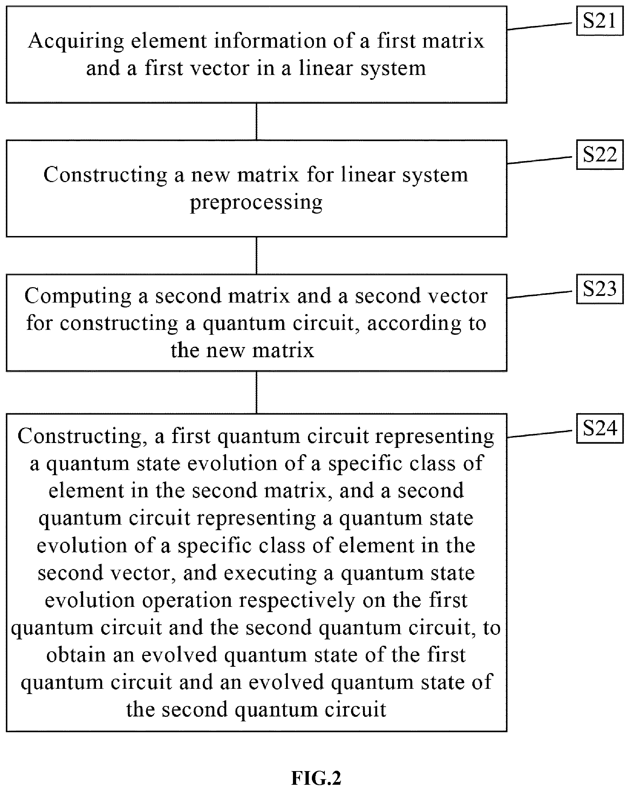

Fig. 2 is a schematic flowchart of a quantum preprocessing method for a linear system according to an embodiment. As shown in Figure 2, the quantum preprocessing method for a linear system includes the following steps:

S21 : Acquiring element information of a first matrix A and a first vector b in a linear system Ax = $\vec{b}$.

S22: Constructing a new matrix M for linear system preprocessing.

S23: Computing a second matrix A' and a second vector b' for constructing a quantum circuit, according to the new matrix M.

S24 : Constructing, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit.

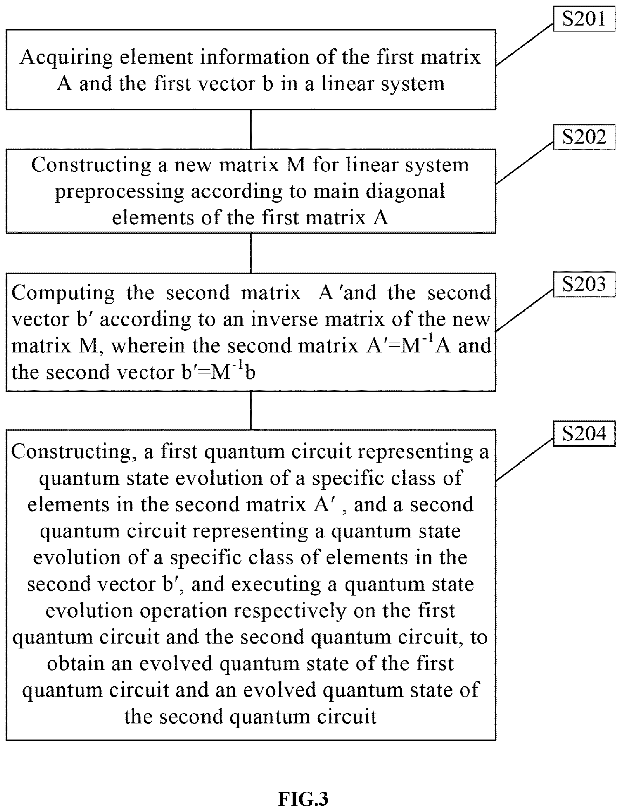

Referring to Figures 3-8, the quantum preprocessing method for a linear system will be further described: Referring to FIG. 3, FIG. 3 is a schematic flowchart of a quantum preprocessing method for a linear system provided by an embodiment of the present disclosure, which may include the following steps:

S201: Acquiring element information of the first matrix A and the first vector b in a linear system.

Specifically, a linear system is a mathematical model that refers to a system composed of linear operators that satisfies both superposition and uniformity (also known as homogeneity). Nowadays, linear systems function as the core of various scientific and engineering fields.

Exemplarily, acquiring element information of a first matrix A and a first vector b in a linear system Ax = $\vec{b}$ specifically includes acquiring element information and dimensions of the first matrix A and the first vector b respectively. Specifically, for a first matrix A of $N * N$, and a first A-dimension vector b, output an $n$-dimension vector x which satisfies Ax = $\vec{b}$, i.e., x = $A^{-1}\vec{b}$. Therefore, the first matrix A needs to be an invertible matrix. In addition, as the data of the first vector b needs to be loaded into the quantum circuit as described below, the dimension $N$ of the first vector b needs to be expressed as a positive integer power of 2. If the $N$ does not conform to the form of a positive integer power of 2, then zeros must be padded in the elements of the first vector b until it satisfies the form of a positive integer power of 2 . Similarly, dimension information of the first matrix A also needs to conform to the form of a positive integer power of 2; if the zero-padding operation is required, the principle and method are the same as the above-mentioned method of padding zeros in the elements of the first vector b, and is not to be repeatedly described in detail here.

$$A = \begin{bmatrix} 1 & 2 & 0 \\ 0 & 3 & 0 \\ 0 & 2 & 2 \end{bmatrix}$$

Exemplarily , for a 3* 3 first matrix and a 3 -dimensional first vector b = [1,2,3], acquire the element information of the first matrix A and the first vector b. Since the dimensions of the first matrix A and the first vector b do not satisfy the form of a positive integer power of 2, zero padding is required, that is, the first matrix A is to be expanded to a 4 * 4 matrix:

$$\begin{vmatrix} 1 & 2 & 0 & 0 \\ 0 & 3 & 0 & 0 \\ 0 & 2 & 2 & 0 \\ 0 & 0 & 0 & 0 \end{vmatrix}$$

The first vector *b* is expanded to a 4- dimensional vector: *b* = [1,2,3,0].

S202: Constructing a new matrix M for linear system preprocessing according to main diagonal elements of the first matrix A.

Specifically, in an *N*-order matrix , the N elements positioned on the diagonal line from the upper left corner to the lower right corner is called the main diagonal elements of the N-order matrix.

Exemplarily, according to the main diagonal elements of the first matrix A, a new matrix M for linear system preprocessing is constructed. Following the above example, the first matrix $A = \begin{bmatrix} 1 & 2 & 0 \\ 0 & 3 & 0 \\ 0 & 2 & 2 \end{bmatrix}$ , accordingly, a new matrix $M = \begin{bmatrix} 1 & 0 & 0 \\ 0 & 3 & 0 \\ 0 & 0 & 2 \end{bmatrix}$ for linear system preprocessing is constructed.

S203: Computing the second matrix A'and the second vector *b*' according to an inverse matrix of the new matrix M, wherein the second matrix A' = M$^{-1}$A and the second vector b' = M$^{-1}$b.

Specifically, the first matrix A is an *N*-order matrix, and if there is another *N*-order matrix *D* such that: AD = DA = I, then the first matrix A is said to be invertible, and the matrix *D* is said to be the inverse matrix of the first matrix A.

Exemplarily, the second matrix A' and the second vector *b*' are computed according to the inverse matrix of the new matrix M. Following the above example, the new matrix $M = \begin{bmatrix} 1 & 0 & 0 \\ 0 & 3 & 0 \\ 0 & 0 & 2 \end{bmatrix}$ , the inverse matrix $M^{-1} = \begin{bmatrix} 1 & 0 & 0 \\ 0 & \frac{1}{3} & 0 \\ 0 & 0 & \frac{1}{2} \end{bmatrix}$ . Thus, the second matrix $A' = \begin{bmatrix} 1 & 2 & 0 \\ 0 & 1 & 0 \\ 0 & 1 & 1 \end{bmatrix}$ and the second vector b' can be computed according to the operational relationship between the second matrix A' = M$^{-1}$A and the second vector b' = M$^{-1}$b.

S204: Constructing, a first quantum circuit representing a quantum state evolution of a specific class of elements in the second matrix A', and a second quantum circuit representing a quantum state evolution of a specific class of elements in the second vector b', and executing a quantum state evolution operation respectively on the first quantum circuit and the second quantum circuit, to obtain an evolved quantum state of the first quantum circuit and an evolved quantum state of the second quantum circuit.

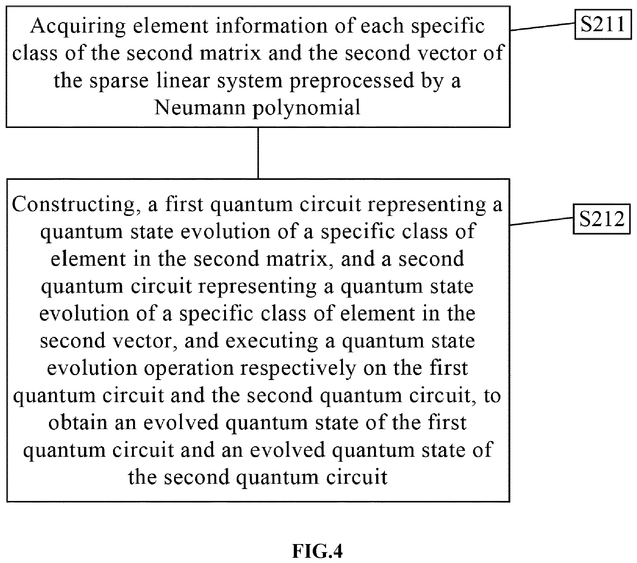

Referring to FIG. 4, FIG. 4 is a schematic flowchart of a quantum preprocessing method based on a sparse linear system provided by an embodiment of the present disclosure, which may include the following steps:

S211: Acquiring element information of each specific class of the second matrix *A*' and the second vector *b*' of the sparse linear system preprocessed by a Neumann polynomial.

A linear system is a mathematical model that refers to a system composed of linear operators that satisfies both superposition and uniformity (also known as homogeneity). Nowadays, linear systems function as the core of various scientific and engineering fields. A sparse linear system is to perform identity transformation on a linear matrix corresponding to the linear system, so that there are as many 0 elements as possible in the matrix. The purpose of doing this is to simplify system design and computing, and it is applicable to numerous fields, such as complex fluid dynamics problems, structural analysis, electromagnetic field computing, and so on .

A Neumann polynomial (or Neumann series) means that if $\lim_{s \to \infty} N^s = 0$ , then I - N is an invertible matrix

and satisfies $(I - N)^{-1} = I + N + N^2 + \cdots + N^s = \sum_{k=0}^{\infty} N^k$ .

Specifically, before acquiring element information of each specific class of the second matrix $A'$ and the second vector $b'$ of the sparse linear system preprocessed by the Neumann polynomial, the method further includes:

S2111: Acquiring element information of the first matrix A and the first vector b in the sparse linear system.

Exemplarily, acquiring element information of the first matrix A and the first vector b in the sparse linear system $Ax = \vec{b}$ specifically includes: acquiring element information and dimensions of the first matrix A and the first vector b respectively. Specifically, for a first matrix A of $P * P$ and a first P-dimension vector b, output a p-dimension vector x which satisfies $Ax = \vec{b}$, i.e., $x = A^{-1}\vec{b}$. Therefore, the first matrix A needs to be an invertible matrix. In addition, as the data of the first vector b needs to be loaded into the quantum circuit as described below, the dimension P of the first vector b needs to be expressed as a positive integer power of 2. If the P does not conform to the form of a positive integer power of 2, then zeros must be padded in the elements of the first vector b until it satisfies the form of a positive integer power of 2 . Similarly, dimension information of the first matrix A also needs to conform to the form of a positive integer power of 2; if the zero-padding operation is required, the principle and method are the same as the above-mentioned method of padding zeros in the elements of the first vector b, and is not to be repeatedly described in detail here.

$$A = \begin{bmatrix} 1 & 2 & 0 \\ 0 & 3 & 0 \\ 0 & 2 & 2 \end{bmatrix}$$

Exemplarily , for a 3* 3 first matrix , and a 3-dimensional first vector b = [1,2,3], acquire the element information of the first matrix A and the first vector b. Since the dimensions of the first matrix A and the first vector b do not satisfy the form of a positive integer power of 2, zero padding is required, that is, the first matrix A is to be expanded to a 4 * 4 matrix:

$$\begin{vmatrix} 1 & 2 & 0 & 0 \\ 0 & 3 & 0 & 0 \\ 0 & 2 & 2 & 0 \\ 0 & 0 & 0 & 0 \end{vmatrix}$$

The first vector $b$ is expanded to a 4- dimensional vector: $b$ = [1,2,3,0].

In a quantum application, by constructing an Oracle or a combination of Oracles, the internal principle of the Oracle or combination is the method flow of the present disclosure. Specifically, an Oracle can be interpreted as a module (similar to a black box) that accomplishes a specific function in a quantum algorithm, wherein specific implementations may apply to specific problems.

Exemplarily, for the first matrix A and the first vector b in the sparse linear system $Ax = \vec{b}$, given the data readout Oracles of the first matrix A and the first vector b,
i.e., $O_{A_1}, O_{A_2}, O_b$, which function as follows:

$O_{A_1}|j, l\rangle = |j, f(j, l)\rangle$, $f(j, l)$ indicating the column ordinal of the $l$-th non-zero element in the $j$-th row of the first matrix $A$;
$O_{A_2}|j, k, 0\rangle = |j, k, A_{jk}\rangle$, $A_{jk}$ indicating the column ordinal of the non-zero element in the $j$-th row and the $k$-th column of the first matrix $A$;

$O_b|0\rangle = |b\rangle$, wherein $|b\rangle = \frac{1}{c}\sum_t b_t|t\rangle$ , and c is the normalization constant of the first vector $b$.

S2112: Constructing a new matrix D for sparse linear system preprocessing according to main diagonal elements of the first matrix A.

Specifically, in an $P$-order matrix, the P elements positioned on the diagonal line from the upper left corner to the lower right corner is called the main diagonal elements of the P-order matrix.

Exemplarily, according to the main diagonal elements of the first matrix A, a new matrix D for sparse linear system preprocessing is constructed. Following the above example, the first matrix $A = \begin{bmatrix} 1 & 2 & 0 \\ 0 & 3 & 0 \\ 0 & 2 & 2 \end{bmatrix}$, accordingly,

a new matrix for sparse linear system preprocessing $D = \begin{bmatrix} 1 & 0 & 0 \\ 0 & 3 & 0 \\ 0 & 0 & 2 \end{bmatrix}$ is constructed.

S2113: Computing the second matrix A' and the second vector b' using a Neumann polynomial and the inverse matrix of the new matrix D, wherein the second matrix $A' = M^{-1}A = \frac{1}{\omega}(I - N^{s+1})$, the second vector b' = M⁻¹b = $[I + N + \cdots + N^s]D^{-1}b$, $\omega$ is a scaling parameter, s is an integer greater than 0, and N is an invertible matrix and satisfies N = I - $\omega D^{-1}A$.

Specifically, the first matrix A is an *P*-order matrix, and if there is another P-order matrix *Q* such that: AQ = QA = I, then the first matrix A is said to be invertible, and the matrix Q is said to be the inverse matrix of the first matrix A.

Exemplarily, the second matrix A'and the second vector *b'* are computed according to the inverse matrix of the new matrix D. Following the above example, the new matrix $D = \begin{bmatrix} 1 & 0 & 0 \\ 0 & 3 & 0 \\ 0 & 0 & 2 \end{bmatrix}$, wherein, the second matrix $A' = M^{-1}A = \frac{1}{\omega}(I - N^{s+1})$, the second vector b' = M⁻¹b = $[I + N + \cdots + N^s]D^{-1}b$, $M^{-1} \equiv [I + N + \cdots + N^s]D^{-1}$, $\omega$ is a scaling parameter, for example $\omega$ = 0.01, s is an integer greater than 0, and N is an invertible matrix and satisfies N = I - $\omega D^{-1}A$.

Optionally, in one embodiment, $N_1$ = I - $\omega$A, $\omega$ is a scaling parameter, satisfying:

$$\omega A = I - (I - \omega A) = I - N_1$$

Then,

$$(\omega A)^{-1} = [I - (I - \omega A)]^{-1} = I + N_1 + N_1{}^2 + \cdots + N_1{}^s.$$

In another implementation, $\omega A$ can also be expressed as $\omega A = D - (D - \omega A)$, where *D* is a matrix represented by the diagonal elements of the first matrix *A*.

$$(\omega A)^{-1} = [D(I - (I - \omega D^{-1}A))]^{-1} = [I - (I - \omega D^{-1}A)]^{-1}D^{-1}.$$

Let

$$N_2 = I - \omega D^{-1}A,$$

then

$$(\omega A)^{-1} \approx M^{-1} \equiv [I + N_2 + N_2{}^2 + \cdots + N_2{}^s]D^{-1}$$

because

$$D^{-1}A = \omega^{-1}[I - N_2],$$

then

$$M^{-1}A = [\mathrm{I} + \mathrm{N}_2 + \mathrm{N}_2{}^2 + \cdots + \mathrm{N}_2{}^s]D^{-1}A$$

Finally got:

$$A' = M^{-1}A = \frac{1}{\omega}\left(I - \mathrm{N}_2{}^{s+1}\right)$$

$$b' = M^{-1}b = [\mathrm{I} + \mathrm{N}_2 + \mathrm{N}_2{}^2 + \cdots + \mathrm{N}_2{}^s]D^{-1}b$$

S212: Constructing, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit.

Specifically, the specific class of element in the second matrix A' may be non-zero elements; and a first quantum circuit representing a quantum state evolution of a specific class of elements of the second matrix A' and a second quantum circuit representing a quantum state evolution of a specific class of elements of the second vector b' are constructed, wherein the first quantum circuit includes a first Oracle and a second Oracle.

The first Oracle is configured to extract position information of the non-zero elements in the second matrix A', so as to encode the column ordinal of the *l*-th non-zero element in the *j*-th row of the second matrix A' onto qubits of the first quantum circuit, wherein the first Oracle is $O'_{A_1}$ and is configured to implement:

$$O'_{A_1}|j,l\rangle = |j, f(j,l)\rangle$$

wherein the *f(j, l)* is a column ordinal of the *l*-th non-zero element in the *j*-th row of the second matrix A'; and encode the serial number of a non-zero element in a corresponding target row among all non-zero elements in this row onto a group of qubits, to realize quantum state transformation: $|j, l\rangle \rightarrow |j, f(j, l)\rangle$; wherein a transformed quantum state includes column ordinal information in the second matrix A'.

In an embodiment, a form of the quantum state after the first Oracle can be as follows:

$$|j\rangle \otimes \frac{1}{\sqrt{\mathrm{d}}}\sum_{l=1}^{\mathrm{d}} |k\rangle$$

Abbreviated as: $|j\rangle\frac{1}{\sqrt{\mathrm{d}}}\sum_{l=1}^{\mathrm{d}} |k\rangle$ , k = *f(j, l)* wherein, j is the target value, indicating the *j*-th row of the matrix; $\otimes$ means tensor product or tensor multiplication ; d is the total number of non-zero elements in the *j*-th row; *l* is the ordinal of the non-zero element among all non-zero elements in the *j*-th row, indicating the *l*-th non-zero element, and the qubits corresponding to $|k\rangle$ may be defined as the first bits.

According to matrix information and column subscript information in the second matrix A', determine the element value of the non-zero element, and encode the element value onto a group of qubits , that is, to encode the element information of the *k*-th column and the *j*-th row of the second matrix A' onto the qubits of the first quantum circuit.

Specifically, the second Oracle is configured to extract element information of the non-zero elements in the second matrix A', so as to encode the element information of the *k*-th column and the *j*-th row of the second matrix A' onto the qubits of the first quantum circuit. The second Oracle is $O'_{A_2}$ , and is configured to implement:

$$O'_{A_2}|j,k,0\rangle = |j,k,A'_{jk}\rangle$$

wherein, the $A'_{jk}$ is the non-zero element in the $k$-th column and the $j$-th row of the second matrix A'.

In an embodiment, the second Oracle is implemented in the following way:

$$|j,k,0\rangle|0\rangle \rightarrow |j,k,A_{jk}\rangle|A_{jj}\rangle \rightarrow |j,k,A_{jk}/A_{jj}\rangle|A_{jj}\rangle \rightarrow |j,k,A_{jk}/A_{jj}\rangle|0\rangle$$

wherein, the $A_{jk}$ is a non-zero element in the $k$-th column and the $j$-th row of the first matrix A, and the $A_{jj}$ is a non-zero element on the main diagonal of the first matrix.

In an optional implementation, first of all, you may acquire 2 groups of qubits with initial states thereof being 0 states; express in binary the $k$-th column and the $j$-th row of the first matrix A; encode them respectively onto a group of qubits corresponding to the number of columns and the number of rows of the first matrix A, to obtain a quantum state $|j, k, 0\rangle$ expressed in binary, wherein the qubits corresponding to the 0 state here are used for subsequent encoding of binary element values.

Then, encode information of the non-zero elements in the $k$-th column and the $j$-th row of the current first matrix A onto qubits corresponding to the 0 state of $|j, k, 0\rangle$, and encode non-zero elements on the main diagonal of the first matrix A onto another group of qubits, to obtain the quantum state $|j, k, A_{jk}\rangle|A_{jj}\rangle$ expressed in binary. According to the same method and principle, continue to execute quantum state evolution operations: execute division operation on the $A_{jk}$ in the state $|j, k, A_{jk}\rangle$ and the $A_{jj}$ in the state $|A_{jj}\rangle$, obtaining $|j, k, A_{jk}/A_{jj}\rangle|A_{jj}\rangle$, and finally restore the $|A_{jj}\rangle$ state to 10),

thus obtaining the quantum state $|j, k, A_{jk}/A_{jj}\rangle|0\rangle$ of the evolved qubits, wherein the $A_{jk}/A_{jj}$ is the non-zero element $A'_{jk}$ in the $k$-th column andj-th row of the second matrix A'.

Exemplarily, following the above example, the first matrix $A = \begin{bmatrix} 1 & 2 & 0 \\ 0 & 3 & 0 \\ 0 & 2 & 2 \end{bmatrix}$, the new matrix

$M = \begin{bmatrix} 1 & 0 & 0 \\ 0 & 3 & 0 \\ 0 & 0 & 2 \end{bmatrix}$, and the second matrix $A' = \begin{bmatrix} 1 & 2 & 0 \\ 0 & 1 & 0 \\ 0 & 1 & 1 \end{bmatrix}$, wherein $A_{32} = 2$, $A_{33} = 2$, $A'_{32} = \frac{A_{32}}{A_{33}} = 1$.

In another optional implementation, first of all, you may acquire one group of qubits with initial states thereof being 0 states; express in binary the $k$-th column and the $j$-th row of the second matrix A', and encode them respectively onto a group of qubits corresponding to the number of columns and the number of rows of the second matrix A', to obtain a quantum state $|j, k, 0\rangle$ expressed in binary, wherein the qubits corresponding to the 0 state here are used for subsequent encoding of binary element values. Then, encode information of the non-zero elements in the $k$-th column and the $j$-th row of the current second matrix A' onto qubits corresponding to the 0 state of $|j, k, 0\rangle$, so as to acquire the quantum state $|j, k, A'_{jk}\rangle$ expressed in binary.

In another implementation, the form of the quantum state after the second Oracle can be as follows:

$$|j\rangle \left( \frac{1}{\sqrt{d}} \Sigma |k\rangle |A'_{jk}\rangle \right)$$

wherein $A'_{jk}$ is the value of the non-zero element in the k-th column and the j-th row of the matrix. In order to distinguish the qubits, the qubits corresponding to $|A'_{jk}\rangle$ can be defined as the second bits.

It should be noted that, if $A'_{jk}$ is a complex number, the real part and the imaginary part thereof may be encoded on the second bits, that is $|A'_{jk}\rangle = |\text{real}\rangle|\text{imag}\rangle$, wherein "real" means the real part, and "imag" means the imaginary part; if $A'_{jk}$ is written in Euler form "$re^{i\theta}$", the information of the r and the $\theta$ can be encoded to the second bits, i.e., $|A'_{jk}\rangle = |r\rangle|\theta\rangle$.

The quantum state $|j\rangle\left(\frac{1}{\sqrt{d}}\sum|k\rangle|A'_{jk}\rangle\right)$ after the second Oracle undergoes a predetermined transformation. The form $|\Psi_j\rangle$ of the final state after the transformation is predetermined by the user, that is, the specific quantum state that the user wishes to obtain, which is used in the field of quantum random walk technologies to solve the problems of Hamiltonian Simulation, linear equation solutions, etc. The predetermined form of the quantum state $|\Psi_j\rangle$ may be :

$$|\Psi_j\rangle = |j\rangle \otimes \left(\frac{1}{\sqrt{d}}\sum|k\rangle|A'_{jk}\rangle\right)\left(\sqrt{\frac{{A'_{jk}}^*}{A'_{\max}}}\ |0\rangle + \sqrt{1 - \left|\frac{A'_{jk}}{A'_{\max}}\right|}\ |1\rangle\right)$$

wherein , the ${A'_{jk}}^*$ is the conjugate of the value of the non-zero element in the *k*-th column and the *j*-th row of the second matrix A', and the $A'_{\max}$ is the value of the element with the largest absolute value in the second matrix A'.

It should be noted that, "to encode onto the quantum state of the qubit" specifically refers to encode onto the right vector of the quantum state. such as in the above $|\Psi_j\rangle$ form. A quantum state is described as a combination of a vertical line and an angle bracket, indicating that the quantum state is a vector (called the state vector, base vector, etc.), $|\Psi_j\rangle$ means a right vector, and $\langle\Psi_j|$ means a left vector .

In addition, it should be noted that: Given that the first matrix is $A' = \frac{1}{\omega}(I - N^{s+1})$, $N = I - \omega D^{-1}A$;

According to $O_{A_1}|j, l\rangle = |j, f(j, l)\rangle$ and $O_{A_2}|j, k, 0\rangle = |j, k, A_{jk}\rangle$, it is possible to build:

$$O_{N_1}|j, l\rangle = |j, f_N(j, l)\rangle \ \text{ and } \ O_{N_2}|j, k, 0\rangle = |j, k, N_{jk}\rangle$$

when $j \neq f_N(j, l)$, $O_{N_1} = O_{A_1}$, a construction process of $O_{N_2}$ is as follows:

$$|j, k, 0\rangle|0\rangle|-\omega\rangle \xrightarrow{O_{A_2}} |j, k, A_{jk}\rangle|0\rangle|-\omega\rangle \xrightarrow{O_{A_2}} |j, k, A_{jk}\rangle|A_{jj}\rangle|-\omega\rangle$$

$$\xrightarrow{\text{quantum divisor}} |j, k, A_{jk}/A_{jj}\rangle|0\rangle|-\omega\rangle \xrightarrow{\text{quantum multiplicator}} |j, k, -\omega A_{jk}/A_{jj}\rangle|0\rangle|0\rangle.$$

wherein, the $A_{jk}$ is the non-zero element at the *k*-th column and the *j*-th row of the second matrix A, and the $A_{jj}$ is the non-zero element on the main diagonal of the second matrix A.

In an optional implementation, first of all, you may acquire 3 groups of qubits with initial states thereof being 0 states; express in binary the *k*-th column and the *j*-th row and $-\omega$ in the second matrix A, encode them onto a group of qubits corresponding to the number of columns and the number of rows of the second matrix A and a group of qubits with the state thereof being $-\omega$ state, to obtain a quantum state $|j, k, 0\rangle|0\rangle|-\omega\rangle$ expressed in binary, wherein the qubits corresponding to the 0 state here are used for subsequent encoding of binary element values.

Then, encode information of the non-zero element in k-th column and the j-th row of the current second matrix A onto qubits in $|j, k, 0\rangle$ corresponding to the 0 state, and encode non-zero elements on the main diagonal of the second matrix to another group of qubits corresponding to the 0 state, to obtain the quantum state $|j, k, A_{jk}\rangle|A_{jj}\rangle|-\omega\rangle$ expressed in binary. According to the same method and principle, continue to execute quantum state evolution operations: execute division operation on the $A_{jk}$ in the state $|j, k, A_{jk}\rangle$ and the $A_{jj}$ in the state $|A_{jj}\rangle$, to obtain $|j, k, A_{jk}/A_{jj}\rangle|0\rangle|-\omega\rangle$. Further continue to execute quantum state evolution operations: execute multiplication operation on the $A_{jk}/A_{jj}$ in the $|j, k, A_{jk}/A_{jj}\rangle$ and the

-$\omega$ in the state $|-\omega\rangle$, to obtain $|j, k, -\omega A_{jk}/ A_{jj}\rangle|0\rangle|-\omega\rangle$, finally restore the state $|-\omega\rangle$ into 10), and obtain the quantum state of the evolved qubit as $|j, k, -\omega A_{jk}/A_{jj}\rangle|0\rangle|0\rangle$.

when

$$j = f_N(j, l), \quad O_{N_1}|j, l\rangle = |j, j\rangle, \quad O_{N_2}|j, j, 0\rangle = |j, j, 1 - \omega\rangle.$$

Construct $N^{s+1}$ according to $O_{N_1}$, $O_{N_2}$, multiplication definition and multiplication operation of matrices, and then construct the first matrix $A'$ according to the subtraction and division operations.

Specifically, first of all, in the first quantum circuit, construct the $(s+1)$-th power of $N$ via quantum multiplication, then compute $I$ - $N^{s+1}$ via quantum subtraction, and finally obtain the quantum state evolution result of the $\frac{1}{\omega}(I - N^{s+1})$ via quantum to division, thereby constructing the first matrix $A'$. It should be noted that the four quantum arithmetic operations are currently widely researched and applied technologies, and specific implementation process of operations of the first matrix $A'$ will not be described here.

Specifically, the second quantum circuit includes a third Oracle , which is $O_{b'}$ and is configured to realize:

$$O_{b'}|0\rangle = |b'\rangle = \frac{1}{c'}\Sigma_s b'_s |s\rangle$$

wherein, the $c'$ is a normalization constant of the second vector $b'$, and the s is the number of elements of the second vector $b'$. The "Normalization" is to restrain the data to be processed to be within a preset value after processing, for example, to normalize the values of m elements so that the sum of the squares of all element values is 1. Its purpose is to facilitate subsequent data processing, and also to ensure improved efficiency of data encoding.

The third Oracle is configured to extract element information of the second vector $b'$, so as to encode the element information of the second vector $b'$ onto the qubits of the second quantum circuit, wherein the amplitudes of quantum state on the qubits in the encoded second quantum circuit are in one-to-one correspondence with the elements of the normalized second vector $b'$.

For example, $b' = [b_1, b_2, b_3, b_4]$, then encode the data of the second vector $b'$ on the quantum state amplitudes, to obtain :

$$|b'\rangle = \frac{1}{\sqrt{|b_1|^2+|b_2|^2+|b_3|^2+|b_4|^2}} \Sigma_{s=1}^4 b'_s |s\rangle = \frac{1}{\sqrt{|b_1|^2+|b_2|^2+|b_3|^2+|b_4|^2}}(b_1|0\rangle +$$

$$b_2|1\rangle + b_3|2\rangle + b_4|3\rangle) = \frac{1}{\sqrt{|b_1|^2+|b_2|^2+|b_3|^2+|b_4|^2}}(b_1|00\rangle + b_2|01\rangle + b_3|10\rangle + b_4|11\rangle)$$

thereby realizing: data of the second vector $b'$ is loaded onto the amplitudes of quantum state of 2 qubits in the quantum circuit, and the amplitudes of the quantum state on the qubits in the second quantum circuit after encoding are in one-to-one correspondence with the elements of the normalized second vector $b'$.

In a quantum application, by constructing an Oracle or a combination of Oracles, the internal principle of the Oracle or combination is the method flow of the present disclosure. Specifically, an Oracle can be interpreted as a module (similar to a black box) that accomplishes a specific function in a quantum algorithm, wherein specific implementations may apply to specific problems.

At present, typically, existing quantum circuit constructions can only use the existing single quantum logic gate, double quantum logic gate, etc. , usually there are the following problems :

In the case of quantum circuits with relatively complex functions, a great number of qubits will be required. If a classical computer is used for simulation, a huge memory space will be consumed, and a great number of logic gates will be required, and thus the simulation can be very time-consuming. Moreover, it is difficult to implement some complex algorithms with quantum circuits.

Based on this, by using Oracle simulation, specific complex functions as well as controlled and transposed conjugate operations are realized. The parameters input by the user to the Oracle can include: Oracle name (configured to identify the functional purpose of the Oracle, such as $O_{b'}$), qubits, matrix elements, etc.

The advantage of this method is to use Oracle as a known module as a whole, and there is no need to pay attention to its internal implementation details. In quantum application scenarios such as the expression of quantum circuits, it is very simple and clear. Since the Oracle functional modules of classical simulation can be equivalent to quantum logic gates, the quantum circuits constructed can be simplified, thus saving memory space required for operation and speeding up simulation verification of quantum algorithms.

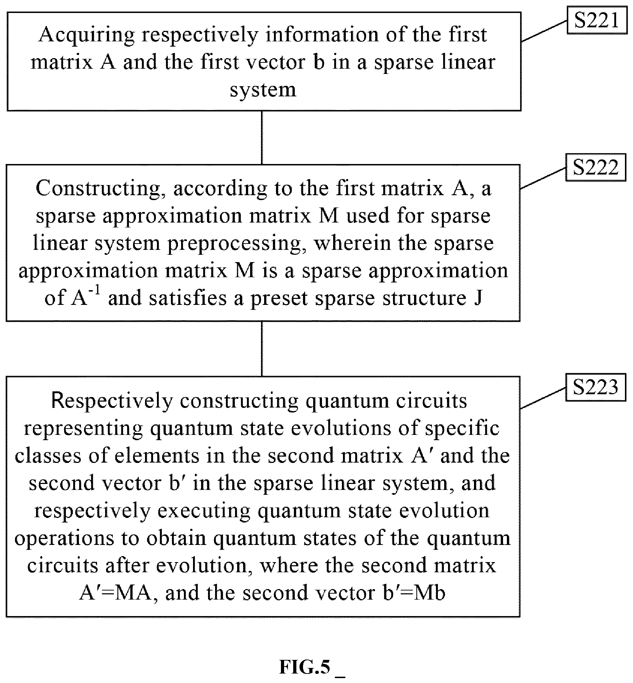

Referring to FIG. 5, FIG. 5 is a schematic flowchart of a sparse approximate inverse quantum preprocessing method for a sparse linear system provided by an embodiment of the present disclosure, which may include the following steps:

S221: Acquiring respectively information of the first matrix A and the first vector b in a sparse linear system.

A linear system is a mathematical model that refers to a system composed of linear operators that satisfies both superposition and uniformity (also known as homogeneity). Nowadays, linear systems function as the core of various scientific and engineering fields. A sparse linear system is to perform identity transformation on a linear matrix corresponding to the linear system, so that there are as many 0 elements as possible in the matrix. The purpose of doing this is to simplify system design and computing, and it is applicable to numerous fields, such as complex fluid dynamics problems, structural analysis, electromagnetic field computing, and so on.

Exemplarily, acquiring element information of the first matrix A and the first vector b in the sparse linear system $Ax = b$ specifically includes: acquiring element information and dimensions of the first matrix A and the first vector b respectively. Specifically, for a first matrix of one $P * P$ and a first $P$-dimension vector b, output a $p$-dimension vector x which satisfies $Ax = b$, i.e., $x = A^{-1}b$. Therefore, the first matrix A needs to be an invertible matrix. In addition, as the data of the first vector b needs to be loaded into the quantum circuit as described below, the dimension $P$ of the first vector b needs to be expressed as a positive integer power of 2. If the $P$ does not conform to the form of a positive integer power of 2, then zeros must be padded in the elements of the first vector b until it satisfies the form of a positive integer power of 2 . Similarly, dimension information of the first matrix A also needs to conform to the form of a positive integer power of 2; if the zero-padding operation is required, the principle and method are the same as the above-mentioned method of padding zeros in the elements of the first vector b, and is not to be repeatedly described in detail here.

Exemplarily , a 4- dimensional first vector $b = [1,2,3,4]$.

It should be noted that in complex application scenarios or fields of sparse linear systems, such as fluid dynamics, electromagnetic field computing, etc., the dimensions of the above-mentioned first matrix are relatively large, and the computing thereof is relatively complicated. Therefore, in order to clearly illustrate the solution of this application, here only the above-mentioned simplified example is used for illustration, which is convenient for understanding.

S222: Constructing, according to the first matrix A, a sparse approximation matrix M used for sparse linear system preprocessing, wherein the sparse approximation matrix M is a sparse approximation of $A^{-1}$ and satisfies a preset sparse structure J.

Specifically, let N = {1,2,3,...,n} , $J \subset N \times N$ represent a given sparse structure. The sparse approximation inverse preprocessing technology aims to explicitly constructing a sparse approximation for $A^{-1}$, the most basic premise thereof is that: given a first sparse matrix A, there is a sparse approximation matrix M in a certain sense for $A^{-1}$, so that $M \approx A^{-1}$. The key to the success of the algorithm is how to quickly capture the position information of large elements of $A^{-1}$ so as to determine the sparse structure of M.

It should be noted that the sparse approximation inverse preprocessing technique of F-norm minimization computes the sparse approximation M of $A^{-1}$ by minimizing the residual matrix $\|AM - I\|_F$, wherein M satisfies a certain sparse structure (M is either given in advance, or is dynamically determined during the execution of the algorithm). According to characteristics of a F-norm of a matrix, minimization of $\|AM - I\|_F$ can be transformed into solving independently n Least Squares problems, and has naturally parallel characteristics. However, for a typical first matrix A, it is often difficult to pre-determine a reasonable and valid sparse structure for M: when there are only a few large elements in $A^{-1}$, it may be ineffective to capture position information of a priori structure; alternatively, only when a priori structure is very dense, a M of higher degree of approximation can be acquired at the expense of computing and storage. In order to overcome the above difficulties, a strategy of dynamically determining the sparse structure of M is proposed: this strategy generally starts from a simple initial structure (such as a structure of an identity matrix, or a structure of a first matrix A after sparsification), and then gradually expands according to certain rules or adjusts in an adaptive way, until the residual matrix satisfies a given precision $\|AM - I\|_F \leq \varepsilon$, where $\varepsilon$ represents a preset precision value, or a predetermined maximum value that the number of non-zero elements of M has reached.

Specifically, constructing a sparse approximation matrix M for sparse linear system preprocessing according to the first matrix A, includes:

S2221: determining a sparse structure $J_k$ of the k-th column of the sparse approximation matrix M, and a non-zero row index set $I_k$ representing the first matrix A(·, $J_k$), wherein the $J_k$ is an n-dimensional vector set, the $J_k$ = {i|(i, k) ∈ J}, J c N × N and represents the preset sparse structure;

Specifically, in the preset sparse structure J, construct: an n-dimensional vector set with a sparse structure thereof being $J_k$, considering the k-th column of M, let $J_k$ represent a non-zero column index set of A($I_k$,·), and A($I_k$,·) represent a submatrix consisting of rows corresponding to indexes in $I_k$; and a non-zero row index set $I_k$ of the first matrix A(·,$J_k$), where A(·,$J_k$) represents a submatrix consisting of rows corresponding of indexes in $J_k$, and $J_k$ = [i|(i, k) ∈ J}.

S2222: constructing a third matrix $A_k$ according to the non-zero row index set $I_k$ and the $J_k$, wherein the $A_k$ =

$A(I_k, J_k)$;
Exemplarily, following the above example, obtain a 4*4 first matrix A in the sparse linear system:

$$\begin{vmatrix} 2 & 1 & 2 & 0 \\ 0 & 4 & 0 & 1 \\ 1 & 0 & 0 & 0 \\ 0 & 0 & 2 & 0 \end{vmatrix}$$

It can be seen that, in the case of k = 2, then $J_k$ = {1,2}. obtaining $I_k$ = {1,2,3} according to the matrix A. Construct a third matrix $A_k$, let $n_1$ = |$I_k$| be the number of elements of the instruction set ||$I_k$|; similarly, let $n_2$ = |$J_k$|, $A_k$ = $A(I_k, J_k)$, then the least squares problem is simplified to a small-scale $n_1 \times n_2$ unconstrained least squares problem.

$$\widetilde{m}_k = (A_k^T A_k)^{-1} A_k^T \tilde{e}_k$$

S2223 : Computing according to the third matrix $A_k$, and constructing a sparse approximation matrix M = $(m_1, m_2, ..., m_k, ..., m_n)$ for sparse linear system preprocessing, wherein $\tilde{e}_k$ = $e_k(I_k)$, the $e_k$ represents an identity matrix, and the $m_k$ is determined by $\widetilde{m}_k$ = $m_k(J_k)$.

Specifically, the sparse approximate matrix M = $(m_1, m_2, ..., m_k, ..., m_n)$, then:

$$\|AM - I\|_F^2 = \sum_{k=1}^{n} \|(AM - I)e_k\|_2^2 = \sum_{k=1}^{n} \|Am_k - e_k\|_2^2$$

That is to say, the above problem can be decomposed into n independent Least Squares problems with constraints, which can be processed in parallel, where $min_{m_k} \|Am_k - e_k\|_2$, k = 1,2,3,...,n.

According to $A_k = A(I_k, J_k)$, the Least Squares problems are simplified to a small-scale $n_1 \times n_2$ unconstrained Least Squares problem:

$$min_{\widetilde{m}_k \in \mathrm{R}^{n_2}} \|A_k \widetilde{m}_k - \tilde{e}_k\|_2$$

wherein, R is the Real Number Set, $\widetilde{m}_k$ = $m_k(J_k)$, $\tilde{e}_k$ = $e_k(I_k)$ , $e_k$ representing the identity matrix.

The first matrix Ais non-singular, and the third matrix $A_k$ has full rank. Therefore, to solve the above Least Squares problem, a compact QR decomposition of the third matrix $A_k$ can be performed according to the modified Gram-Schmidt orthogonalization process , i.e.,

$$A_k = QR$$

wherein, R is a non-singular $n_2 \times n_2$ upper triangular matrix, Q is a column-orthogonal matrix, satisfying $Q^T$ = $Q^{-1}$. Let

$$\widetilde{m}_k = R^{-1} Q^T \tilde{e}_k = (A_k^T A_k)^{-1} A_k^T \tilde{e}_k$$

$\tilde{c} = Q^T \tilde{e}_k$, then have $\widetilde{m}_k = R^{-1}\tilde{c}$, get , and thereby get the sparse approximation M of A$^{-1}$.

S223: respectively constructing quantum circuits representing quantum state evolutions of specific classes of elements in the second matrix A' and the second vector b' in the sparse linear system, and respectively executing quantum state evolution operations to obtain quantum states of the quantum circuits after evolution, where the second matrix A' = MA, and the second vector b' = Mb.

In a quantum application, by constructing an Oracle or a combination of Oracles, the internal principle of the Oracle or combination is the method flow of the present disclosure. Specifically, an Oracle can be interpreted as a module (similar to a black box) that accomplishes a specific function in a quantum algorithm, wherein specific implementations may apply to specific problems.

Exemplarily, for the first matrix A and the first vector b in the sparse linear system Ax = b, given Oracles $O_{A_1}$, $O_{A_2}$, $O_b$, as the data readout of the first matrix A and the first vector b, they function as follows:

$O_{A_1}|j, l\rangle = |j, f(j, l)\rangle$, where $f(j, l)$ indicates the column ordinal of the *l*-th non-zero element in the *j*-th row of the first matrix A;

$O_{A_2}|j, k, 0\rangle = |j, k, A_{jk}\rangle$, where $A_{jk}$ indicates the column ordinal of the non-zero element in the *k*-th column and in the *j*-th row of the first matrix A;

$O_{A_3}|j, l\rangle = |j, g(j, l)\rangle$, where $g(j, l)$ indicates the row ordinal of the *l*-th non-zero element in the *j*-th column of the first matrix A; and

$O_b|0\rangle = |b\rangle$, where

$$|b\rangle = \frac{1}{c}\sum_s b_s |s\rangle$$ , and *c* is the normalization constant of the first vector *b*.

Constructing quantum circuits representing quantum state evolutions of specific classes of elements in the second matrix A' in the sparse linear system, specifically includes:

Constructing Oracle $O_{A_1'}$ and Oracle $O_{A_2'}$, which are configured to extract element information of the non-zero elements in the second matrix A', wherein, the Oracle $O_{A_1'}$ functions as $O_{A_1'}|j, l\rangle = |j, f'(j, l)\rangle$, and the Oracle $O_{A_2'}$ functions as $O_{A_2'}|j, k, 0\rangle = |j, k, A_{jk}'\rangle$, and the $f'(j, l)$ is the column ordinal of the *l*-th non-zero element in the *j*-th row of the second matrix A', the $A_{jk}$ is the non-zero element in the *k*-th column and in the *j*-th row of the second matrix A', and k = $f'(j, l)$.

Specifically, the Oracle $O_{A_1'}$ is configured to extract position information of non-zero elements in the second matrix A', so as to encode the column ordinal of the *l*-th non-zero element in the *j*-th row of the second matrix A' onto qubits of the quantum circuit, for implementation of: $$O_{A_1'}|j, l\rangle = |j, f'(j, l)\rangle$$ .

wherein, ordinals of each non-zero element among all the non-zero elements in the corresponding target row of the second matrix A' are encoded into a group of qubits, so as to realize quantum state transformation: $|j, l\rangle \rightarrow |j, f'(j, l)\rangle$; wherein, the transformed quantum state contains the column ordinal information in the second matrix A'.

In an embodiment, the form of the quantum state after Oracle $O_{A_1'}$ can be as follows:

$$|j\rangle \otimes \frac{1}{\sqrt{d}}\sum_{l=1}^{d} |k\rangle$$

Abbreviated as: $|j\rangle\frac{1}{\sqrt{d}}\sum_{l=1}^{d} |k\rangle$ , k = $f'(j, l)$, wherein, *j* is the target value, indicating the *j*-th row of the matrix; $\otimes$ means tensor product or tensor multiplication; d is the total number of non-zero elements in the $_j$-th row; *l* is the ordinal of a non-zero element among all non-zero elements in the j-th row, indicating the *l*-th non-zero element, and the qubits corresponding to $|k\rangle$ may be defined as the first bits.

According to the matrix information and column subscript information in the second matrix A', determine the element value of a non-zero element, and encode the element value onto a group of qubits, that is, to encode the element information of the *k*-th column and the *j*-th row of the second matrix A' onto the qubits of the quantum circuit.

Specifically, the Oracle $O_{A_2'}$ is configured to extract element information of the non-zero elements in the second matrix A', so as to encode the element information of the *k*-th column and the *j*-th row of the second matrix A' onto the qubits of the quantum circuit.

The Oracle $O_{A_2'}$ , configured to implement:

$$O_{A'_2}|j,k,0\rangle = |j,k,A'_{jk}\rangle$$

In an optional implementation, first of all, you may acquire one group of qubits with initial states thereof being 0 states; express in binary the $k$-th column and the $j$-th row of the second matrix A'; encode them respectively onto a group of qubits corresponding to the number of columns and the number of rows of the second matrix A'; to obtain a quantum state $|j, k, 0\rangle$ expressed in binary, wherein the qubits corresponding to the 0 state here are used for subsequent encoding of binary element values. Then, encode information of the non-zero element in the $k$-th column and the $j$-th row of the current second matrix A' onto qubits corresponding to the 0 state of $|j, k, 0\rangle$, so as to obtain a quantum state

$$|j,k,A'_{jk}\rangle$$ expressed in binary.

In another implementation, the form of the quantum state after Oracle $O_{A'_2}$ can be as follows:

$$|j\rangle\left(\frac{1}{\sqrt{d}}\sum|k\rangle|A'_{jk}\rangle\right)$$

wherein , $A'_{jk}$ is the value of the non-zero element in the $k$-th column and the $j$-th row of the matrix. In order to distinguish the qubits, qubits corresponding to $|A'_{jk}\rangle$ may be defined as the second bits.

It should be noted that, if $A'_{jk}$ is a complex number, the real part and the imaginary part thereof may be encoded on the second bits, that is $|A'_{jk}\rangle = |real\rangle|imag\rangle$ , wherein "real" means the real part, and "imag" means the imaginary part ; if $A'_{jk}$ is written in Euler form "$re^{i\theta}$", the information of the r and the $\theta$ can be encoded to the second bits, i.e., $|A'_{jk}\rangle = |r\rangle|\theta\rangle$ .

The quantum state $|j\rangle\left(\frac{1}{\sqrt{d}}\sum|k\rangle|A'_{jk}\rangle\right)$ after the Oracle $O_{A'_2}$ undergoes a predetermined transformation. The form $|\Psi_j\rangle$ of the final state after the transformation is predetermined by the user, that is, the specific quantum state that the user wishes to obtain, which is used in the field of quantum random walk technologies to solve the problems of Hamiltonian Simulation, linear equation solutions, etc. The predetermined form of the quantum state $|\Psi_j\rangle$ may be :

$$|\Psi_j\rangle = |j\rangle \otimes \left(\frac{1}{\sqrt{d}}\sum|k\rangle|A'_{jk}\rangle\right)\left(\sqrt{\frac{A'_{jk}{}^*}{A'_{max}}}\,|0\rangle + \sqrt{1-\left|\frac{A'_{jk}}{A'_{max}}\right|}\,|1\rangle\right)$$

wherein , the $A'_{jk}{}^*$ is the conjugate of the value of the non-zero element in the $k$-th column and the $j$-th row of the second matrix A', and the $A'_{max}$ is the value of the element with the largest absolute value in the second matrix A'.

It should be noted that, given the second matrix A' = MA, the $\tilde{m}_k$ is to be implemented by an operator $U_k$ constructing the quantum circuit: $U_k|j\rangle|0\rangle = |j\rangle|\tilde{m}_{kj}\rangle$, wherein the $U_k$ specifically implements evolution of the following quantum states:

$$|k\rangle|j\rangle|0\rangle|0\rangle \rightarrow |k\rangle|j\rangle|A_k\rangle|0\rangle \rightarrow |k\rangle|j\rangle|A_k\rangle|\tilde{m}_{kj}\rangle \rightarrow |k\rangle|j\rangle|0\rangle|\tilde{m}_{kj}\rangle.$$

Specifically, $\tilde{m}_k = (\tilde{m}_{k1}, ..., \tilde{m}_{kn2})^T$, since the $n_1$, $n_2$ is very small here, the solution process of the classical Least Squares problem can be directly expressed by a quantum circuit. The solution of the Least Squares method $\tilde{m}_k$ can be expressed as $\tilde{m}_k = (A_k^T A_k)^{-1} A_k^T \tilde{e}_k$, wherein an expression of $\tilde{m}_k$ can be directly computed as $\tilde{m}_k = (A_k^T A_k)^{-1} A_k^T \tilde{e}_k$, that is, each item of $\tilde{m}_k$ is an expression of some elements in $A_k$ (because the matrix of $A_k$ is small in scale, a mathematical expression thereof can be given, and the most basic approach of which is to compute the adjoint matrix of $A_k^T A_k$ so as to compute its inverse matrix). As the dimensions of each $A_k$ may be different, let the first matrix A be a sparse matrix, $n_1$, $n_2$ take the maximum thereof, and then the scales will be identical. Alternatively, it can be dynamically computed according to the dimension of the matrix of $A_k$. the implementation principle of $U_k$ is to construct an expression by the operations of reading elements of $A_k$, the execution process thereof is as follows:

$$|k\rangle|j\rangle|0\rangle|0\rangle \xrightarrow{O_{A_2}} |k\rangle|j\rangle|A_k\rangle|0\rangle \xrightarrow{O_{A_1}} |k\rangle|j\rangle|A_k\rangle|\tilde{m}_{kj}\rangle \xrightarrow{\text{back calculation}} |k\rangle|j\rangle|0\rangle|\tilde{m}_{kj}\rangle.$$

In an optional implementation, first of all, you may acquire four groups of qubits with initial states thereof being 0 states; express in binary the $k$-th column and the $j$-th row of the third matrix $A_k$, and encode them respectively onto a group of qubits corresponding to the number of columns and the number of rows of the third matrix $A_k$, to obtain a quantum state $|k\rangle|j\rangle|0\rangle|0\rangle$ expressed in binary, wherein the qubits corresponding to the 0 state here are used for subsequent encoding of binary element values.

Then, encode information of the non-zero elements in the $k$-th column and the $j$-th row of the current third matrix $A_k$ onto qubits corresponding to the 0 state of $|k\rangle|j\rangle|A_k\rangle|0\rangle$, to obtain the quantum state $|k\rangle|j\rangle|A_k\rangle|0\rangle$ expressed in binary. According to the same method and principle, continue to execute quantum state evolution operations: obtain $|k\rangle|j\rangle|A_k\rangle|\tilde{m}_{kj}\rangle$, and finally restore the $|A_k\rangle$ state to 10), thus obtaining the quantum state $|k\rangle|j\rangle|0\rangle|\tilde{m}_{kj}\rangle$ of the evolved qubits.

It should be noted that the above method is a quantum static method of constructing a sparse approximate inverse, while a quantum dynamic method of constructing a sparse approximate inverse is similar to the above method, the difference therebetween is that iteration is required for a quantum dynamic method of constructing a sparse approximate inverse. For example, in the 0-th iteration, you may construct an operation $U^{(0)}$ for extracting a sparse structure of $M^{(0)}$ and elements thereof. Assuming that the iteration has been executed for $h$ times, an operation $U^{(h)}$ for extracting a sparse structure of $M^{(h)}$ and elements thereof has been obtained. Next, the (h+1)-th iteration will be executed. When a new sparse structure is being determined, the $U^{(h)}$ and the abovementioned Oracle need to be repeatedly called. Since the $U^{(h)}$ is derived from $U^{(h-1)}$ and the abovementioned Oracle, the number of calls to the $U^{(0)}$ and the abovementioned Oracle increases exponentially with the number of iterations. When the number of iterations is set to a certain constant, the quantum preprocessing process for sparse approximate inverse of a sparse linear system can also be achieved.

It should be noted that, in the above process, it is assumed that the $k$-th column $m_k^{(h)}$ of $M^{(h)}$ is being constructed. Select $J_k^{(0)}$ to be the initial sparse structure of $m_k^{(h)}$, and the sparse structure of $m_k^{(h)}$ becomes $J_k^{(h)}$ after h times of paddling. Define $I_k^{(h)}$ to be an index set of non-zero rows corresponding to $A\left(\cdot, J_k^{(h)}\right)$. Let $A_k = A(I_k^{(h)}, J_k^{(h)})$, $\tilde{e}_k = e_k\left(I_k^{(h)}\right)$, assume $\tilde{m}_k^{(h)}$ to be the solution of the Least Squares problem, and the corresponding residual is

$$r_k = A m_k^{(h)} - e_k$$

$$\tilde{r}_k = A_k \widetilde{m}_k^{(h)} - \tilde{e}_k$$

where the norm of $r_k$ is exactly equal to the norm of .

If $\|r_k\|_2 > \varepsilon$, define $L_k = \{i | r_k(i) \neq 0\}$, let $N_k$ be the index set of non-zero columns corresponding to $A(L_k \cdot)$, define

$$\hat{J}_k = N_k \backslash J_k^{(h)}$$

which constitutes the candidate index set for the next padding, where the method for padding $J_k^{(h)}$ can be as follows:

,,, For each one $j \in \hat{J}_k$, consider a one-dimensional optimization problem:

$$min_{\mu_j}\|r_k + \mu_j A e_j\|_2$$

whose solution may be obtained as:

$$\mu_j = -\frac{r_k^T A e_j}{\|A e_j\|_2^2}$$

wherein $e_j$ is a unit vector for the $j$-th column, and $\mu_j$ is a variable intermediate parameter.

The 2-norm $\rho_j$ of the new residual $r_k + \mu_j A e_j$ satisfies:

$$\rho_j{}^2 = \|r_k\|_2^2 - \frac{(r_k^T A e_j)^2}{\|A e_j\|_2^2}$$

Select an index $j$ corresponding to several smallest $\rho_j$ in the set $\hat{J}_k$ as the most favorable index, and pad it into $J_k^{(h)}$ to get $J_k^{(h+1)}$. (a small $\rho_j$ indicates that elements with the index $j$ are effective on reduction of $r_k$, that is, the $j$ also needs to be added into $J_k$)

Constructing a quantum circuit representing quantum state evolutions of specific classes of elements in the second vector b' in the sparse linear system, including:

Constructing an Oracle $O_{b'}$ for extracting element information of the second vector b', so as to encode the element information of the second vector $b'$ onto qubits of the quantum circuit, wherein amplitudes of quantum states on the qubits of the quantum circuit after encoding are in one-to-one correspondence with elements of the second vector b' after normalization.
the Oracle $O_{b'}$ is configured to implement:

$$O_{b'}|0\rangle = |b'\rangle = \frac{1}{c'}\sum_s b'_s|s\rangle$$

wherein the $c'$ is a normalization constant of the second vector b', and the $s$ is a number of elements of the second vector b'.

It should be noted that the "Normalization" is to restrain the data to be processed to be within a preset value after processing, for example, to normalize the values of r elements so that the sum of the squares of all element values is 1. Its purpose is to facilitate subsequent data processing, and also to ensure improved efficiency of data encoding.

For example, $b' = [b_1, b_2, b_3, b_4]$, then, encode the data of the first vector $b'$ onto the quantum state amplitudes, to obtain:

$$|b'\rangle = \frac{1}{\sqrt{|b_1|^2+|b_2|^2+|b_3|^2+|b_4|^2}} \sum_{s=1}^{4} b'_s |s\rangle = \frac{1}{\sqrt{|b_1|^2+|b_2|^2+|b_3|^2+|b_4|^2}} (b_1|0\rangle +$$

$$b_2|1\rangle + b_3|2\rangle + b_4|3\rangle) = \frac{1}{\sqrt{|b_1|^2+|b_2|^2+|b_3|^2+|b_4|^2}} (b_1|00\rangle + b_2|01\rangle + b_3|10\rangle + b_4|11\rangle)$$

thereby realizing: data of the second vector $b'$ is loaded onto the amplitudes of quantum state of 2 qubits in the quantum circuit, and the amplitudes of the quantum state on the qubits in the quantum circuit after encoding are in one-to-one correspondence with the elements of the normalized second vector $b'$.

It should be noted that: given Oracles $O_{A_1}$ and $O_{A_2}$, an operation ($O_{M1}$, $O_{M2}$) for extracting elements of M is constructed; then based on the same function, the second vector b', i.e., Mb, is constructed via quantum walk.

Specifically, it can be seen from the formula $W^n T|b\rangle = T\Gamma_n(M)|b\rangle + |\perp_b\rangle$ and $|0^m\rangle|b\rangle \to |0^m\rangle\Gamma_n(M)|b\rangle + |\Phi^\perp\rangle$ that, when n=1 and m=1, the formula can be transformed into $WT|b\rangle = T\Gamma(M)|b\rangle + |\perp_b\rangle$ and $|0\rangle|b\rangle \to |0\rangle\Gamma(M)|b\rangle + |\Phi^\perp\rangle$, where $|\Phi^\perp\rangle$ is a non-normalized quantum state, $\Pi|\Phi^\perp\rangle = 0$ and $\Pi := |0\rangle\langle0| \otimes I$. Therefore, in order to construct Mb via quantum walk, it is only necessary to construct the operators W and T.

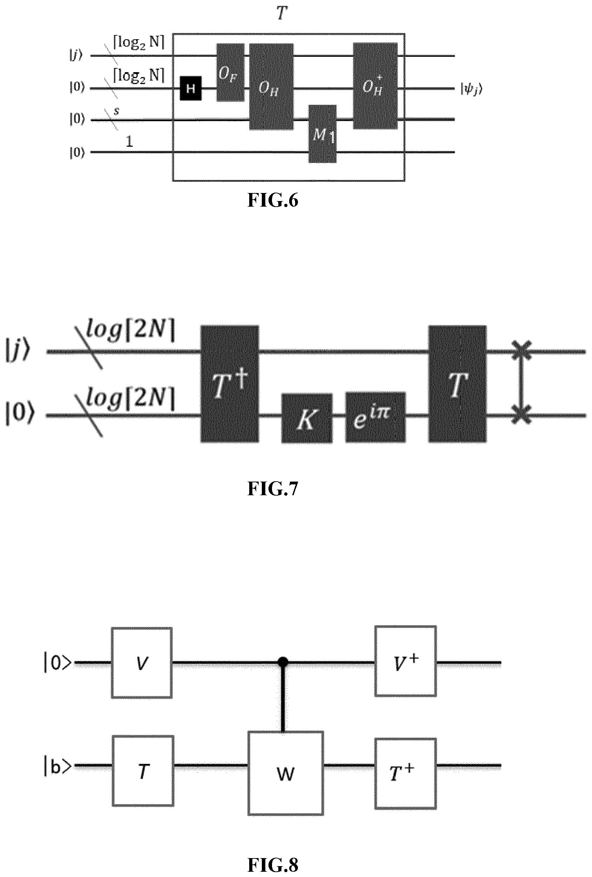

Referring to FIG. 6, FIG. 6 is a schematic diagram of a quantum circuit relating to T, as provided in an embodiment of the present disclosure. Those skilled in the art understand that: H represents a H gate; $O_F$, $O_H$, $M_1$ represent Oracles with different functions; and $O_H^+$ represents a transpose conjugate of $O_H$; T represents an overall functional module of a combination of the H gate and the Oracles, and the Module T functions to transform $|j\rangle$ into $|\mathit{\Psi}_j\rangle$. In addition, a matrix taking the Module T as an input is obtained as an N-order matrix, where the N in the upper $\lceil\log_2 N\rceil$ at $|j\rangle$ represents the number of rows, and the N in the lower $\lceil\log_2 N\rceil$ represent the number of columns, and the other representations are the same as above. The constructed module T can be equivalent to a quantum logic gate in the quantum circuit, with its matrix form being $\sum_{j\in[N]} |\mathit{\Psi}_j\rangle\langle j|$, where $\langle j|$ is a left vector of the quantum state .

Specifically , use the H gate to construct a superposition state: $|l_1\rangle = |j\rangle\frac{1}{\sqrt{d}}\sum_{l=1}^{d} |l\rangle$ ; $O_F$ implements the transformation:

$|l_2\rangle = O_F|l_1\rangle = |j\rangle\frac{1}{\sqrt{d}}\sum |k\rangle$ ; $O_H$ implements the transformation : $O_F|l_2\rangle|0\rangle = |j\rangle\frac{1}{\sqrt{d}}\sum |k\rangle$ ; $M_1$ implements

$$M_1|A'_{jk}\rangle|0\rangle = |A'_{jk}\rangle \left( \sqrt{\frac{A'^*_{jk}}{A'_{max}}} |0\rangle + \sqrt{1 - \left|\frac{A'_{jk}}{A'_{max}}\right|} |1\rangle \right)$$

the transformation: ; finally , once again call the

$O_H$ to perform the transpose conjugate operation , recycle the qubits encoding the $A'_{jk}$ , and then output $|\mathit{\Psi}_j\rangle$.

It should be noted that this schematic diagram only shows some of the quantum circuits related to this application, and the reference signs and connection relationships in the figure are only examples and do not constitute restriction to the present invention.

Referring to FIG. 7, FIG. 7 is a schematic diagram of a quantum circuit of a walk operator W, as provided in an embodiment of the present disclosure. Those skilled in the art can understand that any simple function can be linearly approximated as a linear combination of other functions, and an inverse function of a matrix can be approximated by Chebyshev polynomials, the details are as follows:

$$K|0^r\rangle|b\rangle = \frac{1}{\alpha} |0^r\rangle F|b\rangle + |\Xi^\perp\rangle,$$

$$K := V^{\dagger}UV, U := \sum_i |i\rangle\langle i|\otimes U_i, V|0^m\rangle := \frac{1}{\sqrt{\alpha}}\sum_i \sqrt{\alpha_i}|i\rangle, F = \sum_i \alpha_i G_i, \alpha := \sum_i \alpha_i, r =$$

$$m + t, \text{ and } (|0^r\rangle\langle 0^r|\otimes\mathbb{I})|\Xi_i^{\perp}\rangle.$$

In this application, the inverse matrix is found, which satisfies $O(\|A^{-1} - F\|) = \varepsilon$. The linear combination is:

$$g(x) := 4\sum_{j=0}^{j_0}(-1)^j\frac{\sum_{i=j+1}^{b}\binom{2b}{b+j}}{2^{2b}}\mathcal{T}_{2j+1}(x)$$

here

$$j_0 = \sqrt{b\log(4b/\epsilon)}, b = \kappa^2\log(\kappa/\epsilon), \ g(x) \text{ is } 2\epsilon,$$

where $D_{\kappa} := (-1, -1/\kappa)U(1/\kappa, 1)$.

$$\mathcal{T}_{2j+1}(x)$$

is a Chebyshev polynomial of the first kind.

Quantum walks: In order to implement Chebyshev polynomials, it needs to be performed in the framework of quantum walks.

Since the quantum walk is executed on some states $|\varphi_j\rangle$ in the space $\mathbb{C}^{2N}\otimes\mathbb{C}^{2N}$, a mapping is defined $T := \sum_{j\in[N]}|\varphi_j\rangle\langle j|$, from $\mathbb{C}^N$ to $\mathbb{C}^{2N}\otimes\mathbb{C}^{2N}$.

$$|\psi_j\rangle := |j\rangle\otimes\frac{1}{\sqrt{d}}\sum_{k\in[N]:A_{jk}\neq 0}\left(\sqrt{A_{jk}^*}\,|k\rangle + \sqrt{1 - |A_{jk}|}\,|k + N\rangle\right)$$

and a walk operator is defined:

$$W = S(2TT^{\dagger} - I)$$

The inversion operation of the product state in the $|\varphi_j\rangle$ is executed by the operator S, thus obtaining:

$$T^{\dagger}W^n T|b\rangle = |0^m\rangle\mathcal{T}_n(H)|b\rangle + |\perp_b\rangle$$

$$\mathcal{T}_n(\lambda)$$

is a Chebyshev polynomial of the first kind.

Exemplarily, as shown in FIG. 7, a quantum circuit of the walk operator is illustrated. Because $W = S(2TT^{\dagger} - I_{4N2})$, the S can be constructed via a group swap operation (for example, a SWAP gate, the symbol of two bold Xs connecting to each other in the qubit in Figure 7 indicates a SWAP gate), and the rest is $TT^{\dagger} - I_{4N2}$.

$$|\psi_j\rangle := |j\rangle \otimes \frac{1}{\sqrt{d}} \sum_{k\in[N]:A_{jk}\neq 0} \left( \sqrt{A_{jk}^*}\,|k\rangle + \sqrt{1-|A_{jk}|}\,|k+N\rangle \right) = |j\rangle \otimes |\phi_j\rangle$$

Accordingly, $TT^\dagger = |j\rangle\langle j|\otimes|\phi_j\rangle\langle\phi_j|$. The operator T is a unitary operator in the quantum circuit, and it turns $|j\rangle|0\rangle$ into $|\psi_j\rangle$, It is different from the dimension $4N^2 \times 2N$of $T := \sum_{j\in N}|\psi_j\rangle\langle j|$. For distinction, configured to define the quantum circuit:$T_{qc}$

$$T_{qc}\left(\sum_j |j\rangle\langle j|\otimes(2|0\rangle\langle 0| - I_{2N})\right)T_{qc}^\dagger = \sum_j |j\rangle\langle j|\otimes(2|\phi_j\rangle\langle\phi_j| - I_{2N}) = 2TT^\dagger - I_{4N^2}$$

Also,

$$K = 2|0\rangle\langle 0| - I_{2N}.$$

At present, typically, existing quantum circuit constructions can only use the existing single quantum logic gate, double quantum logic gate, etc. , usually there are the following problems :

In the case of quantum circuits with relatively complex functions, a great number of qubits will be required. If a classical computer is used for simulation, a huge memory space will be consumed, and a great number of logic gates will be required, and thus the simulation can be very time-consuming. Moreover, it is difficult to implement some complex algorithms with quantum circuits.

Based on this, by using Oracle simulation, specific complex functions as well as controlled and transposed conjugate operations are realized. The parameters input by the user to the Oracle can include: Oracle name (configured to identify the functional purpose of the Oracle, such as $O_{b'}$), qubits, matrix elements, etc.

The advantage of this method is to use Oracle as a known module as a whole, and there is no need to pay attention to its internal implementation details. In quantum application scenarios such as the expression of quantum circuits, it is very simple and clear. Since the Oracle functional modules of classical simulation can be equivalent to quantum logic gates, the quantum circuits constructed can be simplified, thus saving memory space required for operation and speeding up simulation verification of quantum algorithms.

Referring to FIG. 8, FIG. 8 is a schematic diagram of a quantum circuit configured to implement function of the third Oracle function, as provided by an embodiment of the present disclosure.

Specifically, in the schematic diagram of the quantum circuit shown in Figure 8 , V and T represent Oracles with different functions, " † " represents transpose conjugation, and T represents an overall functional module of a combination of the H gate and the Oracles, and the Module T functions to transform $|j\rangle$ into $|\Psi_j\rangle$. In addition, a matrix taking the Module T as an input is obtained as an N-order matrix. The constructed Module T can be equivalent to a quantum logic gate in the quantum circuit, with its matrix form being $\sum_{j\in[N]}|\Psi_j\rangle\langle j|$, where $\langle j|$ is a left vector of the quantum state. The quantum circuit as shown in FIG. 8 can perform quantum state evolution from quantum state $|b\rangle$ to $|b'\rangle$, alternatively, the quantum circuit as shown in FIG. 8 can perform quantum state evolution from quantum state to $|b\rangle$ to $|D^{-1}b\rangle$.

Construct $N^e$, ($e$ = 1,2,3, ..., $s$) , according to $O_{N_1}$, $O_{N_2}$, multiplication definition and multiplication operation of matrices, and then construct $I + N + \cdots + N^s$ according to addition operation, so as to implement $O_{b'}|0\rangle = |b'\rangle = [I + N + \cdots + N^s]D^{-1}|b\rangle$.

Specifically, first of all, in the second quantum circuit, construct the $s$-th power of $N$ via quantum multiplication, then compute $I + N + \cdots + N^s$ via quantum addition, thereby constructing a quantum evolution result of the second vector $b'$ on the second quantum circuit. It should be noted that the four quantum arithmetic operations are currently widely researched and applied technologies, and specific implementation process of operations of the second vector $b'$ will not be described here.

A quantum Oracle is a "Black Box" that represents a certain transition of a quantum state. A typical example of a quantum Oracle is a linear system: $O|x\rangle|0\rangle = |x\rangle|f(x)\rangle$, where the computation of f(x) takes the first quantum register as input and the second quantum register as output. Another example is that a QRAM can be viewed as a kind of Oracle. Many quantum algorithms use Oracles, but they don't care about the implementation of Oracles. An Oracle may be decomposed into quantum gates, and may also implement QRAMs. In QPanda, you may use the " Oracle " function to define it. The "Oracle" is considered to be a user-provided name.

It can be seen that the present application encodes matrix and vector information of a linear system onto quantum states, links classical data structure with the quantum state in the quantum field, and performs evolution operations for encoding a classical data structure onto quantum states to obtain an evolved quantum state of the quantum circuit, which can take advantage of the quantum superposition characteristics to accelerate solution of linear systems with large condition numbers and expand the simulation application scenarios of quantum computing.

Compared with the prior art, this disclosure provides a quantum preprocessing method for a linear system. First of all, element information of a first matrix A and a first vector b in a linear system is acquired. Then, a new matrix for linear system preprocessing is constructed according to the main diagonal elements of the first matrix A. Next, a second matrix A' and a second vector b' for constructing a quantum circuit are computed, according to the inverse matrix of the new matrix M. Next, a first quantum circuit representing a quantum state evolution of a specific class of element in the second matrix A', and a second quantum circuit representing a quantum state evolution of a specific class of element in the second vector b' are constructed. Finally, a quantum state evolution operation is executed respectively for the first quantum circuit and the second quantum circuit, to obtain an evolved quantum state of the first quantum circuit and an evolved quantum state of the second quantum circuit. It can be seen that by using the superposition characteristics of quantum, by encoding relevant information of the linear system onto quantum states, a classical data structure is linked with qubit states in the quantum field (that is, the quantum state), a quantum preprocessing technology that can satisfy different linear systems can be realized, which can be used in the simulation of quantum computing, lowers the condition number of linear systems, and fills in the technical gaps in the field of quantum computing.

In addition, compared with prior art, the disclosure further provides a quantum preprocessing method based on a sparse linear system. First of all, acquire element information of each specific class of the second matrix A' and the second vector b' of the sparse linear system preprocessed by a Neumann polynomial. Then, construct a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit. It can be seen that by using the superposition characteristics of quantum, by encoding relevant information of the sparse linear system onto quantum states, a classical data structure is linked with qubit states in the quantum field (that is, the quantum state), a quantum preprocessing technology that can satisfy sparse linear systems can be realized, which can be used in the simulation of quantum computing, reduces the condition number of sparse linear systems, and fills in the technical gaps in the field of quantum computing.

In addition, compared with the prior art, the present disclosure provides a sparse approximate inverse quantum preprocessing method for a sparse linear system. First of all, acquire information of the first matrix A and the first vector b in a sparse linear system. Then, construct, according to the first matrix A, a sparse approximation matrix M used for sparse linear system preprocessing, wherein the sparse approximation matrix M is a sparse approximation of $A^{-1}$ and satisfies a preset sparse structure J. Next, respectively construct quantum circuits representing quantum state evolutions of specific classes of elements in the second matrix A' and the second vector b' in the sparse linear system, respectively executing quantum state evolution operations, and obtaining the quantum states of the quantum circuits after evolution, where the second matrix A' = MA, and the second vector b' = Mb. By using the quantum superposition characteristics, a sparse approximate inverse quantum preprocessing method for a sparse linear system is realized, which is used for the simulation of quantum computing, reduces the condition number of sparse linear systems, and fills the technical gaps in related technologies.

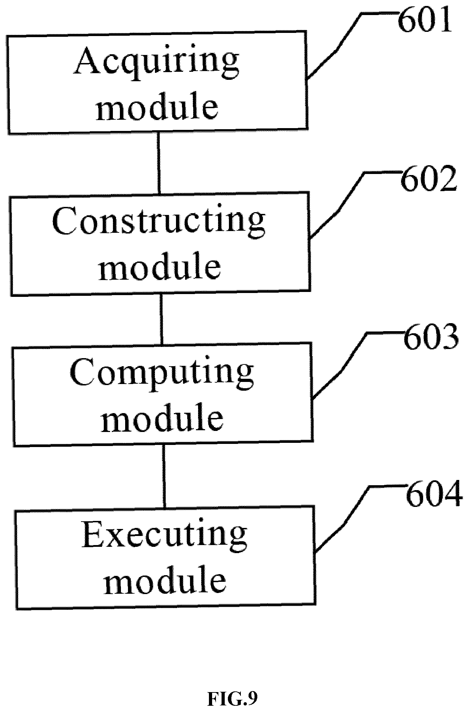

Referring to FIG. 9, FIG. 9 is a schematic structural illustration of a quantum preprocessing device for a linear system, as provided by an embodiment of the present disclosure. The quantum preprocessing device may include an acquiring module 601, a constructing module 602, a computing module 603 and an executing module 604.

For example, a quantum preprocessing device may be configured to perform the processing in the method shown in FIG. 2. For example, the acquiring module 601 acquires element information of a first matrix A and a first vector b in the linear system Ax = $\vec{b}$. The constructing module 602 constructs a new matrix M for linear system preprocessing. The computing module 603 computes a second matrix A' and a second vector b' for constructing a quantum circuit, according to the new matrix M. The executing module 604 constructs, a first quantum circuit representing a quantum state evolution of a specific class of element in the second matrix A', and a second quantum circuit representing a quantum state evolution of a specific class of element in the second vector b', and executes a quantum state evolution operation respectively on the first quantum circuit and the second quantum circuit, to obtain an evolved quantum state of the first quantum circuit and an evolved quantum state of the second quantum circuit.

For example, the quantum preprocessing device can also be configured to perform the processing in the method shown in FIG. 3. An acquiring module 601, configured to acquire element information of a first matrix A and a first vector b in the linear system;

A constructing module 602, configured to construct a new matrix M for linear system preprocessing according to main diagonal elements of the first matrix A;

A computing module 603, configured to compute a second matrix A' and a second vector b' according to an inverse matrix of the new matrix M, wherein the second matrix A' = $M^{-1}A$, and the second vector b' = $M^{-1}b$;

A executing module 604, configured to construct, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit. Specifically, the specific class of element are non-zero elements.

Specifically, the executing module includes a first Oracle module and a second Oracle module:

the first Oracle module is configured to extract position information of non-zero elements in the second matrix A', so as to encode a column ordinal of the *l*-th non-zero element in the *j*-th row of the second matrix A' onto qubits of the first quantum circuit; and

the second Oracle module is configured to extract element information of non-zero elements in the second matrix A', so as to encode element information of an element in the *k*-th column and the *j*-th row of the second matrix A' onto qubits of the first quantum circuit.

Specifically, the first Oracle module is an $O'_{A_1}$ module, and the second Oracle module is an $O'_{A_2}$ module, configured to implement:

$$O'_{A_1}|j, l\rangle = |j, f(j, l)\rangle$$

$$O'_{A_2}|j, k, 0\rangle = |j, k, A'_{jk}\rangle$$

wherein, the $f(j, l)$ is a column ordinal of the *l*-th non-zero element in the *j*-th row of the second matrix A', and the $A'_{jk}$ is a non-zero element in the *k*-th column and the *j*-th row of the second matrix A'.

Specifically, the second Oracle module is implemented in the following way :

$$|j, k, 0\rangle|0\rangle \rightarrow |j, k, A_{jk}\rangle|A_{jj}\rangle \rightarrow \left|j, k, \frac{A_{jk}}{A_{jj}}\right\rangle|A_{jj}\rangle \rightarrow \left|j, k, \frac{A_{jk}}{A_{jj}}\right\rangle|0\rangle$$

wherein the $A'_{jk}$ is a non-zero element in the *k*-th column and the *j*-th row of the first matrix A, and the $A_{jj}$ is a non-zero element on the main diagonal of the first matrix A.

Specifically, the executing module also includes a third Oracle module:

the third Oracle is configured to extract element information of the second vector b', so as to encode the element information of the second vector b' onto qubits of the second quantum circuit, wherein amplitudes of quantum states on the qubits of the second quantum circuit after encoding are in one-to-one correspondence with elements of the second vector b' after normalization.

Specifically, the third Oracle is $O_{b'}$, configured to implement:

$$O_{b'}|0\rangle = |b'\rangle = \frac{1}{c'}\sum_s b'_s |s\rangle$$

wherein the $c'$ is a normalization constant of the second vector b', and the *s* is a number of elements of the second vector b'.

Compared with the prior art, this disclosure provides a quantum preprocessing method for a linear system. First of all, acquire element information of a first matrix A and a first vector b in the linear system. Then, construct a new matrix M for linear system preprocessing according to main diagonal elements of the first matrix A. Next, compute a second matrix A' and a second vector b' according to an inverse matrix of the new matrix M. Finally, construct a first quantum circuit representing a quantum state evolution of a specific class of element in the second matrix A' and a second quantum circuit representing a quantum state evolution of a specific class of element in the second vector b', and execute a quantum state evolution operation respectively on the first quantum circuit and the second quantum circuit, to obtain an evolved quantum state of the first quantum circuit and an evolved quantum state of the second quantum circuit. It can be seen that by using the quantum superposition characteristics, and by encoding relevant information of a linear system onto quantum states, a classical data structure is linked with the qubit state in the quantum field, that is, the quantum state, a quantum preprocessing technology that can satisfy different linear systems can be realized, which is used for the simulation of quantum computing, reduces the condition number of sparse linear systems, and fills the technical gaps in related technologies.

For example, the quantum preprocessing device can also be configured to perform the processing in the method shown in FIG. 4.

For example, an acquiring module 601, configured to acquire element information of each specific class of the second matrix *A'* and the second vector *b'* of the sparse linear system preprocessed by a Neumann polynomial;

A constructing module 602, configured to construct, a first quantum circuit representing a quantum state evolution of a specific class of element in the second matrix A', and a second quantum circuit representing a quantum state evolution of a specific class of element in the second vector b', and execute a quantum state evolution operation respectively on the first quantum circuit and the second quantum circuit, to obtain an evolved quantum state of the first quantum circuit and an evolved quantum state of the second quantum circuit.

Specifically, the specific class of element are: non-zero elements.

Specifically, before the acquiring module, the device also includes:

An information acquiring module, configured to acquire element information of the first matrix A and the first vector b in the sparse linear system;

A matrix constructing module, configured to construct a new matrix D for sparse linear system preprocessing according to main diagonal elements of the first matrix A;

A computing module, configured to compute the second matrix A' and the second vector *b'* using a Neumann polynomial and the inverse matrix of the new matrix D, wherein the second matrix $A' = M^{-1}A = \frac{1}{\omega}(I - N^{s+1})$, the second vector b' = M⁻¹b = [*I* + *N* + ⋯ + *N*ˢ]D⁻¹*b*, $\omega$ is a scaling parameter, s is an integer greater than 0, and N is an invertible matrix and satisfies N = *I* - $\omega$D⁻¹A.

Specifically, the constructing module includes a first Oracle and a second Oracle:

the first Oracle is configured to extract position information of non-zero elements in the second matrix A', so as to encode a column ordinal of the *l*-th non-zero element in the *j*-th row of the second matrix A' onto qubits of the first quantum circuit; and

the second Oracle is configured to extract element information of non-zero elements in the second matrix A', so as to encode element information of an element in the *k*-th column and the *j*-th row of the second matrix A' onto qubits of the first quantum circuit.

Specifically, the first Oracle module is an $O_{A_1'}$ module, and the second Oracle module is an $O_{A_2'}$ module, configured to implement:

$$O_{A_1'}|j, l\rangle = |j, f'(j, l)\rangle$$

$$O_{A_2'}|j, k, 0\rangle = |j, k, A_{jk}'\rangle$$

wherein, the f(j, l)is a column ordinal of the *l*-th non-zero element in the *j*-th row of the second matrix A', and the $A_{jk}'$ is a non-zero element in the *k*-th column and the *j*-th row of the second matrix A'.

Specifically, the constructing module includes a third Oracle module:

The third Oracle is configured to extract element information of the second vector *b'*, so as to encode the element information of the second vector *b'* onto qubits of the second quantum circuit, wherein amplitudes of quantum states on the qubits of the second quantum circuit after encoding are in one-to-one correspondence with elements of the second vector *b'* after normalization.

Specifically, the third Oracle module is an $O_{b'}$ module configured to implement:

$$O_{b'}|0\rangle = |b'\rangle = \frac{1}{c'}\sum_t b'_t |t\rangle$$

wherein the c' is a normalization constant of the second vector b', and the s is a number of elements of the second vector b'.

Compared with the prior art, this disclosure provides a quantum preprocessing method for a linear system. Firstly, acquire element information of each specific class of the second matrix A' and the second vector b' of the sparse linear system preprocessed by a Neumann polynomial. Then construct, a first quantum circuit representing a quantum state evolution of a specific class of element in the second matrix A', and a second quantum circuit representing a quantum state evolution of a specific class of element in the second vector b', and execute a quantum state evolution operation respectively on the first quantum circuit and the second quantum circuit, to obtain an evolved quantum state of the first quantum circuit and an evolved quantum state of the second quantum circuit. It can be seen that by using the superposition characteristics of quantum, by encoding relevant information of the sparse linear system onto quantum states, a classical data structure is linked with the qubit state in the quantum field, that is, the quantum state, and a quantum preprocessing technology that can satisfy the sparse linear system is realized, which is used for the simulation of quantum computing, lowers the condition number of sparse linear systems, and fills in the technical gap in the field of quantum computing.

For example, the quantum preprocessing device may be a sparse approximate inverse quantum preprocessing device of a sparse linear system, and may also be configured to perform the processing in the method shown in FIG. 5.

An acquiring module 501, configured to acquire respectively information of the first matrix A and the first vector b in a sparse linear system;

A constructing module 502, configured to construct, according to the first matrix A, a sparse approximation matrix M used for sparse linear system preprocessing, wherein the sparse approximation matrix M is a sparse approximation of $A^{-1}$ and satisfies a preset sparse structure J.

A constructing module 503, configured to respectively construct quantum circuits representing quantum state evolutions of specific classes of elements in the second matrix A' and the second vector b' in the sparse linear system, and respectively execute quantum state evolution operations to obtain the quantum states of the quantum circuits after evolution, where the second matrix A' = MA, and the second vector b' = Mb.

Specifically, the specific class of elements are: non-zero elements.

Specifically, the executing module includes:

A first extraction module, configured to construct Oracle $O_{A'_1}$ and Oracle $O_{A'_2}$, which are configured to extract element information of the non-zero elements in the second matrix A', wherein, the Oracle $O_{A'_1}$ functions as

$O_{A'_1}|j,l\rangle = |j,f'(j,l)\rangle$, and the Oracle $O_{A'_2}$ functions as $O_{A'_2}|j,k,0\rangle = |j,k,A'_{jk}\rangle$, and the $f(j, l)$ is the column ordinal of the l-th non-zero element in the j-th row of the second matrix A', the $A_{jk}$ is the non-zero element in the k-th column and in the j-th row of the second matrix A', and k = f'(j, l).

Specifically, the executing module includes:

A second extraction module, configured to construct an Oracle $O_{b'}$ for extracting element information of the second vector b', so as to encode the element information of the second vector b' onto qubits of the quantum circuit, wherein amplitudes of quantum states on the qubits of the quantum circuit after encoding are in one-to-one correspondence with elements of the second vector b' after normalization.

Specifically, the second extraction module includes an Oracle $O_{b'}$ module, which is configured to realize:

$$O_{b'}|0\rangle = |b'\rangle = \frac{1}{c'}\sum_s b'_s |s\rangle$$

wherein the c' is a normalization constant of the second vector b', and the s is a number of elements of the second vector b'.

Specifically, the constructing module include:

A first constructing unit, configured to determining a sparse structure $J_k$ of the k-th column of the sparse approximation matrix M, and a non-zero row index set $I_k$ representing the first matrix A($\cdot$, $J_k$), wherein the $J_k$ is an n-dimensional vector set, the $J_k$ = {i|(i, k) E J}, J $\subset$ N $\times$ N, and represents the preset sparse structure;

A second constructing unit, configured to construct a third matrix $A_k$ according to the non-zero row index set

$I_k$ and the $J_k$, wherein the $A_k = A(I_k, J_k)$;

A third constructing unit, configured to compute $\tilde{m}_k = (A_k^T A_k)^{-1} A_k^T \tilde{e}_k$ according to the third matrix $A_k$, and construct a sparse approximation matrix M = $(m_1, m_2, ..., m_k, ..., m_n)$ for sparse linear system preprocessing, wherein $\tilde{e}_k = e_k(I_k)$, the $e_k$ represents an identity matrix, and the $m_k$ is determined by $\tilde{m}_k = m_k(J_k)$.

Specifically, the third construction unit includes:

An implementation unit, configured to implement the $\tilde{m}_k$ by an operator $U_k$ obtained from quantum circuit construction by quantum arithmetic operations: $U_k|j\rangle|0\rangle = |j\rangle\tilde{m}_{kj}\rangle$, and the $U_k$ is specifically configured to implement the following quantum state evolution:

$$|k\rangle|j\rangle|0\rangle|0\rangle \rightarrow |k\rangle|j\rangle|A_k\rangle|0\rangle \rightarrow |k\rangle|j\rangle|A_k\rangle|\tilde{m}_{kj}\rangle \rightarrow |k\rangle|j\rangle|0\rangle|\tilde{m}_{kj}\rangle.$$

Compared with the prior art, the present disclosure provides a sparse approximate inverse quantum preprocessing method for a sparse linear system. First of all, acquire respectively information of the first matrix A and the first vector b in a sparse linear system. Then construct, according to the first matrix A, a sparse approximation matrix M used for sparse linear system preprocessing, wherein the sparse approximation matrix M is a sparse approximation of $A^{-1}$ and satisfies a preset sparse structure J. Next, respectively construct quantum circuits representing quantum state evolutions of specific classes of elements in the second matrix A' and the second vector b' in the sparse linear system, and respectively execute quantum state evolution operations to obtain the quantum states of the quantum circuits after evolution, where the second matrix A' = MA, and the second vector b' = Mb. It can be seen that by using the superposition characteristics of quantum, a sparse approximate inverse quantum preprocessing method for a sparse linear system is realized, which is used for the simulation of quantum computing, lowers the condition number of sparse linear systems, and fills in the technical gap in related technologies.

An embodiment of the present disclosure further provides a storage medium, having a computer program stored therein, the computer program being configured to perform during execution thereof steps in any one of the abovementioned method embodiments.

Specifically, in this embodiment, the above-mentioned storage medium may be configured to store a computer program for performing the following steps:

S201: Acquiring element information of a first matrix A and a first vector b in a linear system;

S202: Constructing a new matrix M for linear system preprocessing according to main diagonal elements of the first matrix A.

S203: Computing the second matrix A' and the second vector $b'$ according to an inverse matrix of the new matrix M, wherein the second matrix A' = $M^{-1}$A and the second vector b' = $M^{-1}$b.

S204: Constructing, a first quantum circuit representing a quantum state evolution of a specific class of elements in the second matrix A', and a second quantum circuit representing a quantum state evolution of a specific class of elements in the second vector b', and executing a quantum state evolution operation respectively on the first quantum circuit and the second quantum circuit, to obtain an evolved quantum state of the first quantum circuit and an evolved quantum state of the second quantum circuit.

An embodiment of the present disclosure further provides a storage medium, having a computer program stored therein, the computer program being configured to perform during execution thereof steps in any one of the abovementioned method embodiments.

Specifically, in this embodiment, the above-mentioned storage medium may be configured to store a computer program for performing the following steps:

S211: Acquiring element information of each specific class of the second matrix A' and the second vector b' of the sparse linear system preprocessed by a Neumann polynomial.

S212: Constructing, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit.

In addition, for example, the above-mentioned storage medium may be configured to store a computer program for performing the following steps:

> S201: acquiring respectively information of the first matrix A and the first vector b in a sparse linear system;
>
> S202: construct, according to the first matrix A, a sparse approximation matrix M used for sparse linear system preprocessing, wherein the sparse approximation matrix M is a sparse approximation of $A^{-1}$ and satisfies a preset sparse structure J.
>
> S203:respectively construct quantum circuits representing quantum state evolutions of specific classes of elements in the second matrix A' and the second vector b' in the sparse linear system, and respectively execute quantum state evolution operations to obtain the quantum states of the quantum circuits after evolution, where the second matrix A' = MA, and the second vector b' = Mb.

Specifically, in this embodiment, the above-mentioned storage medium may include various media that can store computer programs but not limited to: U disk, read-only memory (Read-Only Memory, ROM for short), random access memory (Random Access Memory, RAM for short), mobile hard disk, magnetic disks, or optical disks, etc.

Compared with the prior art, this disclosure provides a quantum preprocessing method for a linear system. First of all, acquire element information of a first matrix A and a first vector b in the linear system. Then, construct a new matrix M for linear system preprocessing according to main diagonal elements of the first matrix A. Next, compute a second matrix A' and a second vector b' according to an inverse matrix of the new matrix M. Finally, construct a first quantum circuit representing a quantum state evolution of a specific class of element in the second matrix A' and a second quantum circuit representing a quantum state evolution of a specific class of element in the second vector b', and execute a quantum state evolution operation respectively on the first quantum circuit and the second quantum circuit, to obtain an evolved quantum state of the first quantum circuit and an evolved quantum state of the second quantum circuit. It can be seen that by using the quantum superposition characteristics, and by encoding relevant information of a linear system onto quantum states, a classical data structure is linked with the qubit state in the quantum field, that is, the quantum state, a quantum preprocessing technology that can satisfy different linear systems can be realized, which is used for the simulation of quantum computing, lowers the condition number of sparse linear systems, and fills the technical gaps in related technologies.

In addition, compared with the prior art, the present disclosure provides a quantum preprocessing method based on a sparse linear system. Firstly, acquire element information of each specific class of the second matrix A' and the second vector b' of the sparse linear system preprocessed by a Neumann polynomial. Then, construct a first quantum circuit representing a quantum state evolution of a specific class of element in the second matrix A' and a second quantum circuit representing a quantum state evolution of a specific class of element in the second vector b', and execute a quantum state evolution operation respectively on the first quantum circuit and the second quantum circuit, to obtain an evolved quantum state of the first quantum circuit and an evolved quantum state of the second quantum circuit. It can be seen that by using the quantum superposition characteristics, and by encoding relevant information of a linear system onto quantum states, a classical data structure is linked with the qubit state in the quantum field, that is, the quantum state, a quantum preprocessing technology that can satisfy different linear systems can be realized, which is used for the simulation of quantum computing, reduces the condition number of sparse linear systems, and fills the technical gaps in related technologies.

In addition, compared with the prior art, the present disclosure provides a sparse approximate inverse quantum preprocessing method. First of all, acquire respectively information of the first matrix A and the first vector b in a sparse linear system. Then construct, according to the first matrix A, a sparse approximation matrix M used for sparse linear system preprocessing, wherein the sparse approximation matrix M is a sparse approximation of $A^{-1}$ and satisfies a preset sparse structure J. Next, respectively construct quantum circuits representing quantum state evolutions of specific classes of elements in the second matrix A' and the second vector b' in the sparse linear system, and respectively execute quantum state evolution operations to obtain the quantum states of the quantum circuits after evolution, where the second matrix A' = MA, and the second vector b' = Mb. By using the superposition property of quantum, a sparse approximate inverse quantum preprocessing method for a sparse linear system is realized, which is used for the simulation of quantum computing, lowers the condition number of sparse linear system, and fills the gap in related technologies.

An embodiment of the present disclosure also provides an electronic device, including a memory having a computer program stored therein, and a processor, configured to execute the computer program to perform the steps in any one of the abovementioned method embodiments.

Specifically, the electronic device may further include a transmission device and an I/O device, wherein the transmission device is connected to the processor, and the I/O device is connected to the processor.

Specifically, in this embodiment, the above-mentioned processor may be configured to execute the following steps through a computer program:

> S201 : Acquiring element information of the first matrix A and the first vector b in a linear system;

S202 : Constructing a new matrix M for linear system preprocessing according to main diagonal elements of the first matrix A;

S203 : Computing the second matrix A'and the second vector b' according to an inverse matrix of the new matrix M, wherein the second matrix A' = $M^{-1}A$ and the second vector b' = $M^{-1}b$;

S204: Constructing, a first quantum circuit representing a quantum state evolution of a specific class of elements in the second matrix A', and a second quantum circuit representing a quantum state evolution of a specific class of elements in the second vector b', and executing a quantum state evolution operation respectively on the first quantum circuit and the second quantum circuit, to obtain an evolved quantum state of the first quantum circuit and an evolved quantum state of the second quantum circuit.

Compared with the prior art, this disclosure provides a quantum preprocessing method for a linear system. First of all, acquire element information of the first matrix A and the first vector b in a linear system. Then, construct a new matrix M for linear system preprocessing according to main diagonal elements of the first matrix A. Next, compute the second matrix A'and the second vector *b'* according to an inverse matrix of the new matrix M. Finally, construct a first quantum circuit representing a quantum state evolution of a specific class of elements in the second matrix A' and a second quantum circuit representing a quantum state evolution of a specific class of elements in the second vector b', and execute a quantum state evolution operation respectively on the first quantum circuit and the second quantum circuit, to obtain an evolved quantum state of the first quantum circuit and an evolved quantum state of the second quantum circuit. It can be seen that by using the superposition characteristics of quantum, by encoding the relevant information of the linear system onto quantum states, a classical data structure is linked with qubit states in the quantum field, that is, the quantum state, a quantum preprocessing technology that can satisfy different linear systems can be realized, which can be used in the simulation of quantum computing, lowers the condition number of linear systems, and fills in the technical gaps in the field of quantum computing.

Optionally, in this embodiment, the above-mentioned processor may be configured to execute the following steps through a computer program:

S201: Acquiring element information of each specific class of the second matrix A' and the second vector b' of the sparse linear system preprocessed by a Neumann polynomial;

S202: Constructing, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit.

Compared with the prior art, the disclosure provides a quantum preprocessing method based on a sparse linear system. Firstly, acquire element information of each specific class of the second matrix *A'* and the second vector *b'* of the sparse linear system preprocessed by a Neumann polynomial. Then construct a first quantum circuit representing a quantum state evolution of a specific class of element in the second matrix A' and a second quantum circuit representing a quantum state evolution of a specific class of element in the second vector b', and execute a quantum state evolution operation respectively on the first quantum circuit and the second quantum circuit to obtain an evolved quantum state of the first quantum circuit and an evolved quantum state of the second quantum circuit.. It can be seen that by using the quantum superposition characteristics, and by encoding relevant information of a linear system onto quantum states, a classical data structure is linked with the qubit state in the quantum field, that is, the quantum state, a quantum preprocessing technology that can satisfy sparse linear systems can be realized, which is used for the simulation of quantum computing, lowers the condition number of sparse linear systems, and fills the technical gaps in related technologies.

Optionally, in this embodiment, the above-mentioned processor may also be configured to execute the following steps through a computer program:

S201: acquiring respectively information of the first matrix A and the first vector b in a sparse linear system;

S202: constructing, according to the first matrix A, a sparse approximation matrix M used for sparse linear system preprocessing, wherein the sparse approximation matrix M is a sparse approximation of $A^{-1}$ and satisfies a preset sparse structure J.

S 203 : respectively constructing quantum circuits representing quantum state evolutions of specific classes of elements in the second matrix A' and the second vector b' in the sparse linear system, and respectively executing quantum state evolution operations to obtain the quantum states of the quantum circuits after evolution, where the second matrix A' = MA, and the second vector b' = Mb.

Compared with the prior art, the present disclosure provides a sparse approximate inverse quantum preprocessing method for a sparse linear system. Firstly, acquire respectively information of the first matrix A and the first vector b in a sparse linear system. Then construct according to the first matrix A, a sparse approximation matrix M used for sparse linear system preprocessing, wherein the sparse approximation matrix M is a sparse approximation of $A^{-1}$ and satisfies a preset sparse structure J. Next, respectively construct quantum circuits representing quantum state evolutions of specific classes of elements in the second matrix A' and the second vector b' in the sparse linear system, and respectively execute quantum state evolution operations to obtain the quantum states of the quantum circuits after evolution, where the second matrix A' = MA, and the second vector b' = Mb. By using the quantum superposition characteristics, a quantum preprocessing technology that can satisfy sparse linear systems can be realized, which is used for the simulation of quantum computing, lowers the condition number of sparse linear systems, and fills the technical gaps in related technologies.

The structures, features and effects of the present disclosure have been described in detail above based on the embodiments shown in the drawings. Those described above are only preferred embodiments of the present disclosure, however, the present disclosure does not limit the scope of implementation as shown in the drawings. Changes made to the idea of the present invention, or modifications to equivalent embodiments that are equivalent changes, are still within the spirit covered by the description and drawings shall fall within the protection scope of the present disclosure.

**Claims**

1. A quantum preprocessing method for a linear system, **characterized by** comprising:

   acquiring element information of a first matrix A and a first vector b in a linear system Ax = $\vec{b}$;
   constructing a new matrix M for linear system preprocessing;
   computing a second matrix A' and a second vector b' for constructing a quantum circuit, according to the new matrix M; and
   constructing, a first quantum circuit representing a quantum state evolution of a specific class of element in the second matrix A', and a second quantum circuit representing a quantum state evolution of a specific class of element in the second vector b', and executing a quantum state evolution operation respectively on the first quantum circuit and the second quantum circuit, to obtain an evolved quantum state of the first quantum circuit and an evolved quantum state of the second quantum circuit.

2. The method of claim 1, **characterized in that** the specific class of element are non-zero elements.

3. The method of claim 1 or 2, wherein constructing a new matrix M for linear system preprocessing comprises:

   constructing a new matrix M for linear system preprocessing according to main diagonal elements of the first matrix A;
   wherein said "computing a second matrix A' and a second vector b' for constructing a quantum circuit, according to the new matrix M" comprises:
   computing the second matrix A' and the second vector b' according to an inverse matrix of the new matrix M, wherein the second matrix A' = $M^{-1}A$, and the second vector b' = $M^{-1}b$.

4. The method of claim 1 or 2, wherein the linear system is a sparse linear system, and constructing a new matrix M for linear system preprocessing comprises:

   constructing a new matrix D for sparse linear system preprocessing according to main diagonal elements of the first matrix A, wherein for the new matrix M, $M^{-1} \equiv [I + N + ... + N^s]D^{-1}$;
   wherein said "computing a second matrix A' and a second vector b' for constructing a quantum circuit, according to the new matrix M" comprises: computing the second matrix A' and the second vector b' using a Neumann polynomial and the inverse matrix of the new matrix D, wherein the second matrix

   $$A' = M^{-1}A = \frac{1}{\omega}(I - N^{s+1})$$, the second vector b' = $M^{-1}b = [I + N + \cdots + N^s]D^{-1}b$, $\omega$ is a scaling parameter, s is an integer greater than 0, and N is an invertible matrix and satisfies N = $I - \omega D^{-1}A$.

5. The method of claim 3 or 4, wherein the first quantum circuit comprises a first Oracle and a second Oracle;

the first Oracle is configured to extract position information of non-zero elements in the second matrix A', so as to encode a column ordinal of the *l*-th non-zero element in the *j*-th row of the second matrix A' onto qubits of the first quantum circuit; and

the second Oracle is configured to extract element information of non-zero elements in the second matrix A', so as to encode element information of an element in the *k*-th column and the *j*-th row of the second matrix A' onto qubits of the first quantum circuit.

6. The method of claim 5, wherein the first Oracle is $O'_{A_1}$ , and the second Oracle is $O'_{A_2}$ , configured to implement:

$$O'_{A_1}|j, l\rangle = |j, f(j, l)\rangle$$

$$O'_{A_2}|j, k, 0\rangle = |j, k, A'_{jk}\rangle$$

wherein, the *f(j, l)*is a column ordinal of the *l*-th non-zero element in the *j*-th row of the second matrix A', and the $A'_{jk}$ is a non-zero element in the *k*-th column and the *j*-th row of the second matrix A'.

7. The method of claim 6, wherein the second Oracle is implemented in the following way:

$$|j, k, 0\rangle|0\rangle \rightarrow |j, k, A_{jk}\rangle|A_{jj}\rangle \rightarrow |j, k, A_{jk}/A_{jj}\rangle|A_{jj}\rangle \rightarrow |j, k, A_{jk}/A_{jj}\rangle|0\rangle$$

wherein the $A'_{jk}$ is a non-zero element in the k-th column and the j-th row of the first matrix A, and the $A_{jj}$ is a non-zero element on the main diagonal of the first matrix A.

8. The method of claim 3 or 4, wherein the second quantum circuit comprises a third Oracle; the third Oracle is configured to extract element information of the second vector *b'*, so as to encode the element information of the second vector *b'* onto qubits of the second quantum circuit, wherein amplitudes of quantum states on the qubits of the second quantum circuit after encoding are in one-to-one correspondence with elements of the second vector *b'* after normalization.

9. The method of claim 8 , wherein the third Oracle is $O_{b'}$, configured to implement:

$$O_{b'}|0\rangle = |b'\rangle = \frac{1}{c'}\sum_s b'_s |s\rangle$$

wherein the *c'* is a normalization constant of the second vector *b'*, and the s is a number of elements of the second vector *b'*.

10. The method of claim 1 or 2, wherein the linear system is a sparse linear system, and constructing a new matrix M for linear system preprocessing comprises:

constructing, according to the first matrix A, a sparse approximation matrix M for sparse linear system preprocessing, wherein the sparse approximation matrix M is a sparse approximation of A$^{-1}$ and satisfies a preset sparse structure J;
said "computing a second matrix A' and a second vector *b'* for constructing a quantum circuit, according to the new matrix M" comprises: computing the second matrix A' and the second vector *b'* for constructing a quantum circuit, according to the second matrix A' = MA and the second vector b' = Mb.

11. The method of claim 10 , **characterized in that** respectively constructing quantum circuits representing quantum state evolutions of specific classes of elements in the second matrix A' and the second vector b' in the sparse linear system comprises:

constructing an Oracle $O_{A'_1}$ and an Oracle $O_{A'_2}$ configured to extract element information of non-zero elements in the second matrix A', wherein the Oracle $O_{A'_1}$ functions as $O_{A'_1}|j, l\rangle = |j, f'(j, l)\rangle$, and the Oracle $O_{A'_2}$ functions as $O_{A'_2}|j, k, 0\rangle = |j, k, A'_{jk}\rangle$, the $f'(j, l)$ is a column ordinal of the $l$-th non-zero element in the $j$-th row of the second matrix A', the $A'_{jk}$ is a non-zero element in the $k$-th column and the $j$-th row of the second matrix A', and k = f'(j, l).

12. The method of claim 10 , **characterized in that** respectively constructing quantum circuits representing quantum state evolutions of specific classes of elements in the second matrix A' and the second vector b' in the sparse linear system comprises:
constructing an Oracle $O_{b'}$ for extracting element information of the second vector b' so as to encode the element information of the second vector *b'* onto qubits of the quantum circuit, wherein amplitudes of quantum states on the qubits of the quantum circuit after encoding are in one-to-one correspondence with elements of the second vector *b'* after normalization.

13. The method of claim 12 , wherein the Oracle $O_{b'}$ is configured to implement:

$$O_{b'}|0\rangle = |b'\rangle = \frac{1}{c'}\sum_s b'_s |s\rangle$$

wherein the c' is a normalization constant of the second vector b', and the s is a number of elements of the second vector b'.

14. The method of claim 10 , wherein said "constructing, according to the first matrix A, a sparse approximation matrix M for sparse linear system preprocessing" comprises:

determining a sparse structure $J_k$ of the k-th column of the sparse approximation matrix M, and a non-zero row index set $I_k$ representing the first matrix $A(\cdot, J_k)$, wherein the $J_k$ is an n-dimensional vector set, the $J_k = \{i|(i, k) \in J\}$, J ⊂ N × N, and represents the preset sparse structure;
constructing a third matrix $A_k$ according to the non-zero row index set $I_k$ and the $J_k$, wherein the $A_k = A(I_k, J_k)$;
computing $\widetilde{m}_k = (A_k^T A_k)^{-1} A_k^T \tilde{e}_k$ according to the third matrix $A_k$, and constructing a sparse approximation matrix M = $(m_1, m_2, ..., m_k, ..., m_n)$ for sparse linear system preprocessing, wherein $\tilde{e}_k = e_k(I_k)$, the $e_k$ represents an identity matrix, and the $m_k$ is determined by $\tilde{m}_k = m_k(J_k)$.

15. The method of claim 14 , **characterized in that**, the $\tilde{m}_k$ is implemented by an operator $U_k$ obtained from quantum circuit construction by quantum arithmetic operations: $U_k|j\rangle|0\rangle = |j\rangle|\tilde{m}_{kj}\rangle$, and the $U_k$ is specifically configured to implement the following quantum state evolution:

$$|k\rangle|j\rangle|0\rangle|0\rangle \rightarrow |k\rangle|j\rangle|A_k\rangle|0\rangle \rightarrow |k\rangle|j\rangle|A_k\rangle|\tilde{m}_{kj}\rangle \rightarrow |k\rangle|j\rangle|0\rangle|\tilde{m}_{kj}\rangle.$$

16. A quantum preprocessing device for linear systems, **characterized by** comprising:

an acquiring module, configured to acquire element information of a first matrix A and a first vector b in a linear system;
a constructing module, configured to construct a new matrix M for linear system preprocessing;
a computing module, configured to compute a second matrix A' and a second vector *b'* for constructing a quantum circuit, according to the new matrix M;
an executing module, configured to construct, a first quantum circuit representing a quantum state evolution of a specific class of element in the second matrix A', and a second quantum circuit representing a quantum state evolution of a specific class of element in the second vector b', and to execute a quantum state evolution operation respectively on the first quantum circuit and the second quantum circuit, to obtain an evolved quantum state of the first quantum circuit and an evolved quantum state of the second quantum circuit.

**17.** A storage medium **characterized by** having a computer program stored therein, the computer program being configured to perform during execution thereof the method of any one of claims 1 to 15.

**18.** An electronic device, **characterized by** comprising:

a memory having a computer program stored therein, and
a processor, configured to execute the computer program to perform the method of any one of claims 1 to 15.

I/O device 108

transmission
device
106

processor
102

memory
104

**FIG.1**

Acquiring element information of a first matrix and a first vector in a linear system — S21

Constructing a new matrix for linear system preprocessing — S22

Computing a second matrix and a second vector for constructing a quantum circuit, according to the new matrix — S23

Constructing, a first quantum circuit representing a quantum state evolution of a specific class of element in the second matrix, and a second quantum circuit representing a quantum state evolution of a specific class of element in the second vector, and executing a quantum state evolution operation respectively on the first quantum circuit and the second quantum circuit, to obtain an evolved quantum state of the first quantum circuit and an evolved quantum state of the second quantum circuit — S24

FIG.2

Acquiring element information of the first matrix A and the first vector b in a linear system

S201

Constructing a new matrix M for linear system preprocessing according to main diagonal elements of the first matrix A

S202

Computing the second matrix A 'and the second vector b' according to an inverse matrix of the new matrix M, wherein the second matrix $A'=M^{-1}A$ and the second vector $b'=M^{-1}b$

S203

Constructing, a first quantum circuit representing a quantum state evolution of a specific class of elements in the second matrix A' , and a second quantum circuit representing a quantum state evolution of a specific class of elements in the second vector b', and executing a quantum state evolution operation respectively on the first quantum circuit and the second quantum circuit, to obtain an evolved quantum state of the first quantum circuit and an evolved quantum state of the second quantum circuit

S204

FIG.3

Acquiring element information of each specific class of the second matrix and the second vector of the sparse linear system preprocessed by a Neumann polynomial — S211

Constructing, a first quantum circuit representing a quantum state evolution of a specific class of element in the second matrix, and a second quantum circuit representing a quantum state evolution of a specific class of element in the second vector, and executing a quantum state evolution operation respectively on the first quantum circuit and the second quantum circuit, to obtain an evolved quantum state of the first quantum circuit and an evolved quantum state of the second quantum circuit — S212

**FIG.4**

Acquiring respectively information of the first matrix A and the first vector b in a sparse linear system  ⟋ S221

Constructing, according to the first matrix A, a sparse approximation matrix M used for sparse linear system preprocessing, wherein the sparse approximation matrix M is a sparse approximation of $A^{-1}$ and satisfies a preset sparse structure J  ⟋ S222

Respectively constructing quantum circuits representing quantum state evolutions of specific classes of elements in the second matrix A′ and the second vector b′ in the sparse linear system, and respectively executing quantum state evolution operations to obtain quantum states of the quantum circuits after evolution, where the second matrix A′=MA, and the second vector b′=Mb  ⟋ S223

**FIG.5** _

**FIG.6**

**FIG.7**

**FIG.8**

```
                                            ┌──── 601
┌─────────────────────┐
│      Acquiring      │
│       module        │
└─────────────────────┘
                                            ┌──── 602
┌─────────────────────┐
│     Constructing    │
│       module        │
└─────────────────────┘
                                            ┌──── 603
┌─────────────────────┐
│      Computing      │
│       module        │
└─────────────────────┘
                                            ┌──── 604
┌─────────────────────┐
│      Executing      │
│       module        │
└─────────────────────┘
```

FIG.9

## INTERNATIONAL SEARCH REPORT

| | International application No. |
|---|---|
| | **PCT/CN2021/142565** |

**A. CLASSIFICATION OF SUBJECT MATTER**

G06N 10/00(2022.01)i; G06F 17/16(2006.01)i

According to International Patent Classification (IPC) or to both national classification and IPC

**B. FIELDS SEARCHED**

Minimum documentation searched (classification system followed by classification symbols)

G06N G06F

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 量子, 计算, 线性, 系统, 方程, 预处理, 矩阵, 条件, 线路, 电路, 演化, 量子态, 诺依曼, quantum, comput+, linear, system, equation, pretreatment, matrix, condition, circuit, evolution, state, Neumann

**C. DOCUMENTS CONSIDERED TO BE RELEVANT**

| Category* | Citation of document, with indication, where appropriate, of the relevant passages | Relevant to claim No. |
|---|---|---|
| Y | US 2020104740 A1 (ZAPATA COMPUTING, INC.) 02 April 2020 (2020-04-02)<br>claim 1, description paragraphs [0054], [0065], [0074], [0101], figures 1-7 | 1-3, 16-18 |
| Y | 张衡 (ZHANG, Heng). "一维问题一次形函数有限元方程的条件数与预处理 (Condition Number and Preprocess of the Finite Element Equation of One Dimensional Problem with Linear Shape Function)"<br>《福建师大福清分校学报》 (Journal of Fuqing Branch of Fujian Normal University),<br>No. 2, 31 March 2016 (2016-03-31),<br>ISSN: 1008-3421,<br>page 1, introduction | 1-3, 16-18 |
| A | CN 111582491 A (HEFEI ORIGIN QUANTUM COMPUTING TECHNOLOGY CO., LTD.) 25 August 2020 (2020-08-25)<br>entire document | 1-18 |
| A | CN 109767007 A (SOUTHEAST UNIVERSITY) 17 May 2019 (2019-05-17)<br>entire document | 1-18 |
| A | US 2020349459 A1 (ZAPATA COMPUTING, INC.) 05 November 2020 (2020-11-05)<br>entire document | 1-18 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 March 2022** | **29 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/142565**

| Patent document cited in search report | | | Publication date (day/month/year) | Patent family member(s) | | | Publication date (day/month/year) |
|---|---|---|---|---|---|---|---|
| US | 2020104740 | A1 | 02 April 2020 | WO | 2020072661 | A1 | 09 April 2020 |
| | | | | CA | 3112444 | A1 | 09 April 2020 |
| | | | | EP | 3861488 | A1 | 11 August 2021 |
| | | | | CN | 112789629 | A | 11 May 2021 |
| CN | 111582491 | A | 25 August 2020 | None | | | |
| CN | 109767007 | A | 17 May 2019 | None | | | |
| US | 2020349459 | A1 | 05 November 2020 | None | | | |

Form PCT/ISA/210 (patent family annex) (January 2015)

41

**EP 4 273 758 A1**

## REFERENCES CITED IN THE DESCRIPTION

### Patent documents cited in the description

- CN 202011637102
- CN 202011633352
- CN 202110122930